(19) Europäisches Patentamt
European Patent Office
Office européen des brevets

(11) **EP 1 577 889 A1**

(12) **EUROPEAN PATENT APPLICATION**
published in accordance with Art. 158(3) EPC

(43) Date of publication:
 **21.09.2005 Bulletin 2005/38**

(51) Int Cl.⁷: **G11B 9/14**

(21) Application number: **03777311.6**

(86) International application number:
 **PCT/JP2003/015624**

(22) Date of filing: **05.12.2003**

(87) International publication number:
 **WO 2004/053862 (24.06.2004 Gazette 2004/26)**

(84) Designated Contracting States:
 **AT BE BG CH CY CZ DE DK EE ES FI FR GB GR HU IE IT LI LU MC NL PT RO SE SI SK TR**
 Designated Extension States:
 **AL LT LV MK**

(30) Priority: **12.12.2002 JP 2002361180**

(71) Applicant: **Pioneer Corporation
 Tokyo 153-8654 (JP)**

(72) Inventors:
 • **MAEDA, Takanori, PIONEER CORPORATION
  Tsurugashima-shi, Saitama 350-2288 (JP)**
 • **ONOE, Atsushi, PIONEER CORPORATION
  Tsurugashima-shi, Saitatama 350-2288 (JP)**

(74) Representative: **Skuhra, Udo
 Reinhard-Skuhra-Weise & Partner GbR
 Patentanwälte
 Postfach 44 01 51
 80750 München (DE)**

(54) **INFORMATION RECORDING/READING HEAD AND INFORMATION RECORDING/REPRODUCING DEVICE**

(57)    The probes of an information recording / reading head (110) are arranged such that if the positions of their tip portions are A, B, C, and D, a parallelogram is formed in which a line segment AB is parallel to a line segment CD, and a line segment AC is parallel to a line segment BD, and that if a ratio of the length of the line segment AB to the length of the line segment AC is η and the height of the parallelogram is H when the line segment AC is regarded as a base, the following relationship is satisfied:

$$H = \eta \cdot P.$$

FIG. 15

**Description**

Technical Field

The present invention relates to an information recording / reading head for recording information into an information recording medium or reading the information recorded in the information recording medium, by using recording / reading elements, such as small probes, as well as an information recording / reproducing apparatus.

Background Art

In general, an optical disk apparatus, a magneto-optical disk apparatus, a Hard Disk Drive (HDD) apparatus, and the like are widely used as an information recording / reproducing apparatus that allows the high-density, large-capacity recording of information. However, the requirement for using the information is unending, and it is desired to develop a recording / reproducing apparatus which can record more information into a smaller area and which can perform larger capacity recording.

Under these circumstances, an information recording / reproducing apparatus using a Scanning Probe Microscope (SPM) method is under development, as a technique which can realize the high density, large capacity recording. According to this information recording / reproducing apparatus, it is theoretically possible to realize super high density recording, which exceeds 1 tera bit per 6.45 square centimeters (i.e. 1 square inch).

For example, an information recording / reproducing apparatus using Scanning Nonlinear Dielectric Microscopy (SNDM) has a probe having a tip portion with a radius on the ten nanometer order, and it uses a ferroelectric material as a recording medium. Information is recorded by applying an electric field, which is stronger than the coercive electric field of the ferroelectric material, from the probe to the ferroelectric material, and by forming polarization domains having predetermined polarization directions in the ferroelectric material. Moreover, the information is reproduced by detecting the polarization state of the ferroelectric material, on the basis of the frequency change of an oscillation signal, which oscillates at the resonance frequency of a resonance circuit formed from a capacitance of the ferroelectric material under the probe and an inductor.

Furthermore, there is also developed a SPM recording / reproducing apparatus which has a cantilever having a ten nanoscale tip portion and which uses a polymer film as a recording medium. In such an apparatus, information is recorded by heating the tip portion of the cantilever and putting a small mark on the polymer film by the heat.

Moreover, in such an information recording / reproducing apparatus, it is desired to increase an information recording and reading speed, following an increase in density of information recording and an increase in capacity of the record information. For such a reason, an information recording / reproducing head having multiple probes or multiple cantilevers has been developed. According to such an information recording / reading head, it is possible to increase the information recording speed by applying information to be recorded to the multiple probes or multiple cantilevers at a time, and writing the information at a plurality of positions on the recording surface of the information recording medium at a time. Moreover, it is possible to increase the information reading speed, by reading information recorded at the plurality of positions on the recording surface of the information recording medium at a time, through the multiple proves or the multiple cantilevers.

Disclosure of Invention

By the way, in the information recording / reproducing apparatus using the SPM or the SNDM, multiple probes or multiple cantilevers which are provided for the information recording / reading head, are extremely small and have high dimensional accuracy and high degree of integration, in order to realize the super high density recording. These probes or cantilevers are manufactured by using a micro-machining technique in which micrometer-order molding and material processing are performed by, for example, etching a silicon material. Alternatively, these are manufactured by using a nano-machining technique in which nanometer-order molding and material processing are performed by manipulating molecules and atoms by the SPM technique.

However, the number of probes or cantilevers formed on one head substrate is large and the degree of integration is high, and moreover, there are severe requirements, such as the dimensional accuracy and the uniformity of the probes or cantilevers, so that it is difficult to improve a yield in the production of the information recording / reading head. For example, if a measuring error in only one probe out of multiple probes causes the entire head substrate including the defective probe to be a defective product, it is not easy to improve the yield, which increases the cost of production.

On the other hand, if the information recording / reading head having multiple probes or multiple cantilevers is used to record information into a disk-shaped information recording medium or to reproduce information recorded in the information recording medium, it is necessary to jump tracks in the information recording / reading head every time the information recording medium makes one revolution. Thus, it is hardly possible to improve the information recording and reading speed. This undermines the purpose that is to improve the information recording and reading speed by providing the multiple probes or multiple cantilevers.

Moreover, in the information recording / reproducing apparatus using the SPM or the SNDM, there are requirements, not only for improvement of an information recording density and the information recording and reproducing speed, but also for improvement of an information recording and reproducing accuracy. The information recording and reproduction accuracy cannot be improved by merely increasing the number of small probes or cantilevers, and performing the information recording and reproduction at a time by using of multiple probes or multiple cantilevers. A new technique which can improve the information recording and reproduction accuracy while increasing the information recording density and the information recording and reproducing speed, is required now.

Furthermore, in the information recording / reading head, it is necessary to form, on the head substrate, signal lines which are connected to the individual probes or cantilevers placed on the head substrate. However, the fact that the number of probes or cantilevers is large causes a large number of the signal lines, and complicates the array design, formation, patterning, or the like of the signal lines. Moreover, it increases a substrate space required for the formation of the signal lines, and makes it difficult to secure the space. Furthermore, the signal lines tend to be long and close to each other, which more likely causes a noise.

It is therefore a first object of the present invention to provide: an information recording / reading head which can improve a yield, even though constructed to have a plurality of recording / reading elements, such as probes or cantilevers.

It is a second object of the present invention to provide: an information recording / reading head which can facilitate or efficiently perform the array design, formation, and the like of signal lines which are connected to recording / reading elements, even though constructed to have the plurality of recording / reading elements.

It is a third object of the present invention to provide: an information recording / reading head which can realize the improvement of an information recording / reproducing speed and the improvement of an information recording / reproducing accuracy, in harmony, by using the information recording / reading head having a plurality of recording / reading elements, as well as an information recording / reproducing apparatus.

The above objects of the present invention can be achieved by one information recording / reading head for recording information onto tracks of an information recording medium having the tracks with a track pitch of P, or reading information recorded on the tracks of the information recording medium, the information recording / reading head comprising: a support portion; and four or more recording / reading elements which are supported by the support portion and which record information onto the tracks of the information recording medium or which read information recorded on the tracks of the information recording medium, at least four of the recording / reading elements being arranged on the support portion such that if the positions of recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if a ratio of the length of the line segment AB to the length of the line segment AC is $\eta$ and the height of the parallelogram is H when the line segment AC is regarded as a base, the following relationship is satisfied:

$$H = \eta \cdot P.$$

The above objects of the present invention can be achieved by another information recording / reading head for recording information onto tracks of an information recording medium having the tracks with a track pitch of P, or reading information recorded on the tracks of the information recording medium, the information recording / reading head comprising: a support portion; and four or more recording / reading elements which are supported by the support portion and which record information onto the tracks of the information recording medium or which read information recorded on the tracks of the information recording medium, at least four of the recording / reading elements being arranged on the support portion such that if the positions of recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if the length of the line segment AC is L and an angle ACD made by the line segment AC and the line segment CD is $\alpha$, the following relationship is satisfied:

$$L \cdot \sin\alpha = P.$$

The above objects of the present invention can be achieved by another information recording / reading head for recording information onto tracks of an information recording medium having the tracks with a track pitch of P, or reading information recorded on the tracks of the information recording medium, the information recording / reading head comprising: a support portion; and four or more recording / reading elements which are supported by the support portion and which record information onto the tracks of the information recording medium or which read information recorded on the tracks of the information recording medium, at least four of the recording / reading elements being arranged on the support portion such that if the positions of recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if a ratio of the length of the line segment AB to the length of the line segment AC is $\eta$ and the height of the parallelogram is H when the line segment AC is regarded as a base, the following relationship is satisfied:

$$H= m \cdot \eta \cdot P \text{ (wherein m is a natural number)}.$$

The above objects of the present invention can be achieved by another information recording / reading head for recording information onto tracks of an information recording medium having the tracks with a track pitch of P, or reading information recorded on the tracks of the information recording medium, the information recording / reading head comprising: a support portion; and four or more recording / reading elements which are supported by the support portion and which record information onto the tracks of the information recording medium or which read information recorded on the tracks of the information recording medium, at least four of the recording / reading elements being arranged on the support portion such that if the positions of recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if the length of the line segment AC is L and an angle ACD made by the line segment AC and the line segment CD is $\alpha$, the following relationship is satisfied:

$$L \cdot \sin\alpha = m \cdot P \text{ (wherein m is a natural number)}.$$

The above objects of the present invention can be achieved by another information recording / reading head for recording information onto tracks of an information recording medium, or reading information recorded on the tracks of the information recording medium, the recording / reading head comprising: a support portion; and three or more recording / reading elements which are supported by the support portion and which record information onto the tracks of the information recording medium or which read information recorded on the tracks of the information recording medium, at least three of the recording / reading elements being arranged on the support portion such that when recording / reading end portions of two of the three recording / reading elements are positioned on one track, a recording / reading end portion of the remaining one of the three recording / reading elements is placed on another track.

The above objects of the present invention can be achieved by another information recording / reading head for recording information onto tracks of an information recording medium, or reading information recorded on the tracks of the information recording medium, the recording / reading head comprising: a support portion; and four or more recording / reading elements which are supported by the support portion and which record information onto the tracks of the information recording medium or which read information recorded on the tracks of the information recording medium, at least four of the recording / reading elements being arranged on the support portion such that when recording / reading end portions of two of the four recording / reading elements are positioned on one track, recording / reading end portions of the remaining two of the four recording / reading elements are placed on another track.

The above objects of the present invention can be achieved by one information recording / reproducing apparatus for recording information onto tracks of an information recording medium, or reproducing information recorded on the tracks of the information recording medium, the information recording / reproducing apparatus comprising: an information recording / reading head which has: a support portion; and two or more recording / reading elements which are supported by the support portion and which record information onto the tracks of the information recording medium or which read information recorded on the tracks of the information recording medium, at least two of the recording / reading elements being arranged on the support portion such that their recording / reading end portions are placed on one track; a signal applying device which applies a signal corresponding to the information, to any one of the two recording / reading elements, in order to record the information onto the tracks of the information recording medium through the one recording / reading element; and an information reading device which readily reads the information recorded on the tracks of the information recording medium by the signal applying device, through the other recording / reading element out of the two recording / reading elements.

The above objects of the present invention can be achieved by another information recording / reproducing apparatus for recording information onto tracks of an information recording medium, or reproducing information recorded on the tracks of the information recording medium, the information recording / reproducing apparatus comprising: an information recording / reading head which has: a support portion; and three or more recording / reading elements which are supported by the support portion and which record information onto the tracks of the information recording medium or which read information recorded on the tracks of the information recording medium, at least three of the recording / reading elements being arranged on the support portion such that if recording / reading end portions of two of the three recording / reading elements are positioned on one track, a recording / reading end portion of the remaining one of the three recording / reading elements is placed on another track; a first signal applying device which applies a signal corresponding to the information, to any one of the two recording / reading elements placed on the one track, in order to record the information onto the one track through the one recording / reading element; an information reading device which readily reads the information recorded on the one track by the first signal applying device, through the other recording / reading element out of the two recording / reading elements placed on the one track; a judging device which judges whether or not the recording of the information by the first signal applying device is correctly performed, on the basis of the information read by the information reading device; and a second signal applying device which applies a signal corresponding to the information, to the remaining one recording / reading element, in order to record the information again onto the one track through the remaining one recording / reading element, if the recording of the information by the first signal applying device is not correctly performed.

The above objects of the present invention can be achieved by another information recording / reproducing apparatus for recording information onto tracks of an information recording medium, or reproducing information recorded on the tracks of the information recording medium, the information recording / reproducing apparatus comprising: an information recording / reading head which has: a support portion; and four or more recording / reading elements which are supported by the support portion and which record information onto the tracks of the information recording medium or which read information recorded on the tracks of the information recording medium, at least four of the recording / reading elements being arranged on the support portion such that if recording / reading end portions of two of the four recording / reading elements are positioned on one track, recording / reading end portions of the remaining two of the four recording / reading elements are placed on another track; a first signal applying device which applies a signal corresponding to one portion of the information, to any one of the two recording / reading elements placed on the one track, in order to record the one portion of the information onto the one track through the one recording / reading element; a first information reading device which readily reads the one portion of the information recorded on the one track by the first signal applying device, through the other recording / reading element out of the two recording / reading elements placed on the one track; a second signal applying device which applies a signal corresponding to another portion of the information, to any one of the two recording / reading elements placed on the another track, in order to record the another portion of the information onto the another track through the one recording / reading element; and a second information reading device which readily reads the another portion of the information recorded on the another track by the second signal applying device, through the other recording / reading element out of the two recording / reading elements placed on the another track.

The above objects of the present invention can be achieved by another information recording / reproducing apparatus for recording information onto tracks of an information recording medium, or reproducing information recorded on the tracks of the information recording medium, the information recording / reproducing apparatus comprising: an information recording / reading head which has: a support portion; and four or more recording / reading elements which are supported by the support portion and which record information onto the tracks of the information recording medium or which read information recorded on the tracks of the information recording medium, at least four of the recording / reading elements being arranged on the support portion such that if recording / reading end portions of two of the four recording / reading elements are positioned on one track, recording / reading end portions of the remaining two of the four recording / reading elements are placed on another track; a first signal applying device which applies a signal corresponding to the information, to any one of the two recording / reading elements placed on the one track, in order to record the information onto the one track through the one recording / reading element; an information reading device which readily reads the information recorded on the one track by the first signal applying device, through the other recording / reading element out of the two recording / reading elements placed on the one track; a judging device which judges whether or not the recording of the information by the first signal applying device is correctly performed, on the basis of the information read by the information reading device; a second signal applying device which applies a signal corresponding to the information, to any one of the remaining two recording / reading elements, in order to record the information again onto the one track through the one recording / reading element; and a record position detecting device which detects a record position on the one track of the information to be recorded by the second signal applying device, through the other recording / reading element out of the remaining two recording / reading elements.

The above objects of the present invention can be achieved by one information reproducing apparatus for reproducing information recorded on tracks of an information recording medium, the information reproducing apparatus comprising: an information reading head which has: a support portion; and two or more reading elements which are supported by the support portion and which read information recorded on the tracks of the information recording medium, at least two of the reading elements being arranged on the support portion such that their reading end positions are placed on one track; a signal reading device in which the two reading elements individually read the same information recorded at a same place on the track of the information recording medium, to thereby obtain two reading signals corresponding to the same information; a signal adding device which adds the two reading signals obtained by the signal reading device to each other, after the difference at a reading time point of the two reading elements is adjusted; and a reproducing device which reproduces the information, on the basis of the reading signal added by the signal adding device.

The above objects of the present invention can be achieved by another information reproducing apparatus for reproducing information recorded on tracks of an information recording medium, the information reproducing apparatus comprising: an information reading head which has: a support portion; and two or more reading elements which are supported by the support portion and which read information recorded on the tracks of the information recording medium, at least two of the reading elements being arranged on the support portion such that their reading end positions are placed on one track; a signal reading device in which the two reading elements individually read the same information recorded at a same place on the track of the information recording medium, to thereby obtain two reading signals corresponding to the same information; a signal selecting device which selects any one of the two reading signals obtained by the signal reading device; and a reproducing device which reproduces the information, on the basis of the reading signal selected by the signal selecting device.

The above objects of the present invention can be achieved by another information reproducing apparatus for reproducing information recorded on tracks of an information recording medium, the information reproducing apparatus comprising: an information reading head which has: a support portion; and two or more reading elements which are supported by the support portion and which read information recorded on the tracks of the information recording medium, at least two of the reading elements being arranged on the support portion such that their reading end positions are placed on one track; a signal reading device in which the two reading elements individually read the same information recorded at a same place on the track of the information recording medium, to thereby obtain two reading signals corresponding to the same information; a signal adding device which adds the two reading signals obtained by the signal reading device to each other, after the difference at a reading time point of the two reading elements is adjusted, if both levels of the two reading signals reach a predetermined level; a signal selecting device which selects a higher level reading signal from the two reading signals obtained by the signal reading device, if either or both levels of the two reading signals do not reach the predetermined level; and a reproducing device which reproduces the information, on the basis of the reading signal added by the signal applying device or the reading signal selected by the signal selecting device.

These functions and other advantages of the present invention will be apparent from the following description of embodiments.

Brief Description of Drawings

FIG. 1 is an explanatory diagram showing the positions of recording / reading end portions of recording / reading elements placed on an information recording / reading head in a first embodiment and a second embodiment of the present invention;

FIG. 2 is an explanatory diagram showing the positions of recording / reading end portions of recording / reading elements placed on an information recording / reading head in a third embodiment and a fourth embodiment of the present invention;

FIG. 3 is an explanatory diagram showing the case where square lattices are formed in a probe array of the present invention;

FIG. 4 is an explanatory diagram showing a specific example in a modified embodiment of the information recording / reading head in the first to fourth embodiments of the present invention;

FIG. 5 is an explanatory diagram showing the positions of recording / reading end portions of recording / reading elements placed on an information recording / reading head in a fifth embodiment of the present invention;

FIG. 6 is an explanatory diagram showing the positions of recording / reading end portions of recording / reading elements placed on an information recording / reading head in a sixth embodiment of the present invention;

FIG. 7 is an explanatory diagram showing an information recording / reproducing apparatus in a seventh embodiment of the present invention;

FIG. 8 is an explanatory diagram showing an information recording / reproducing apparatus in an eighth embodiment of the present invention;

FIG. 9 is an explanatory diagram showing an information recording / reproducing apparatus in a ninth embodiment of the present invention;

FIG. 10 is an explanatory diagram showing an information recording / reproducing apparatus in a tenth embodiment of the present invention;

FIG. 11 is an explanatory diagram showing an information reproducing apparatus in an eleventh embodiment of the present invention;

FIG. 12 is an explanatory diagram showing an information reproducing apparatus in a twelfth embodiment of the present invention;

FIG. 13 is an explanatory diagram showing an information reproducing apparatus in a thirteenth embodiment of the present invention;

FIG. 14 is a circuit diagram showing the structure of an information recording / reproducing apparatus in an example of the present invention;

FIG. 15 is an explanatory diagram showing the positions of probes placed on an information recording / reading head in the example of the present invention;

FIG. 16 is a block diagram showing the internal structure of a record processing circuit in the information recording / reproducing apparatus in the example of the present invention;

FIG. 17 is a block diagram showing the internal structure of a reproduction processing circuit in the information recording / reproducing apparatus in the example of the present invention; and

FIG. 18 is a plan view showing another example of the information recording / reading head of the present invention.

Best Mode for Carrying Out the Invention

The embodiments of the present invention will be described with reference to the drawings below.

(First Embodiment)

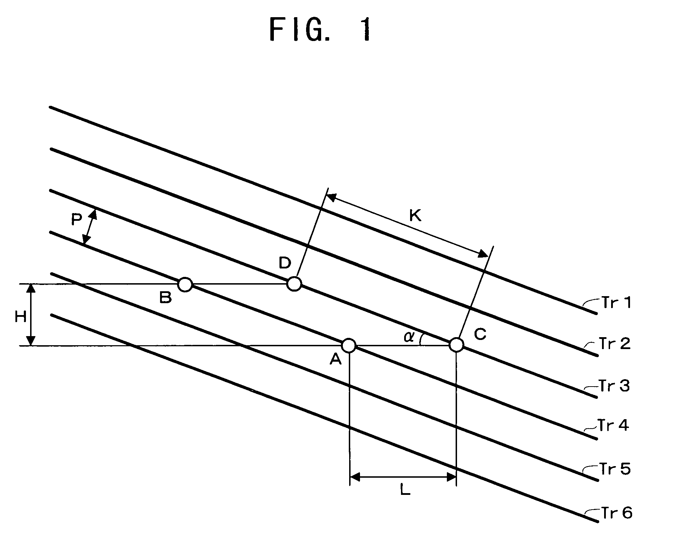

The first embodiment of the present invention will be explained with reference to FIG. 1. FIG. 1 shows the positions of recording / reading end portions of recording / reading elements placed on an information recording / reading head in the first embodiment and the second embodiment of the present invention. In FIG. 1, thick oblique lines individually indicate tracks Tr1 to Tr6 of an information recording medium, and A, B, C, and D individually indicate the positions of the recording / reading end portions of the recording / reading elements. Incidentally, FIG. 1, and FIG. 2 to FIG. 13, which will be used below for explanation of the embodiments of the present invention, embody constitutional elements or the like of the embodiments of the present invention, only for the purpose of explaining technical ideas thereof. The shape, size, position, connection relationship, and the like of various constitutional elements or the like are not limited to the figures.

The information recording / reading head in the first embodiment of the present invention (hereinafter referred to as a "first information recording / reading head") records information onto the tracks of the information recording medium having the tracks with a track pitch of P, or reads information recorded on the tracks of the information recording medium.

Here, for example, the tracks formed spirally on a disk-shaped medium are arc-shaped but not linear. However, the diameter of the disk-shaped medium is extremely larger than the distance between adjacent two of the A, B, C, and D, so that the tracks can be regarded as linear lines. Thus, in the following explanation, even if the tracks of the medium are arc-shaped as described above, they are regarded as linear lines.

Moreover, the information herein may include various kinds of information which can be mainly coded, such as audio data, image data, video data, text data, and a computer program, for example. Furthermore, the information recording medium may include an optical recording medium, a magnetic recording medium, a magneto optical recording medium, a phase-change recording medium, a ferroelectric recording medium, a near-field recording optical medium, and the like.

The first recording / reading head is provided with: a support portion; and four or more recording / reading elements which are supported by the support portion and which record information onto the tracks of the information recording medium or which read information recorded on the tracks of the information recording medium.

The support portion may be made of any material if it can fix the recording / reading elements. If the recording / reading elements are minutely formed and the many recording / reading elements are arrayed in a minute area with high degree of integration, it is desirable to use a silicon substrate, for example.

The recording / reading element may be made of any material if it records the information onto the tracks of the information recording medium or reads the information recorded on the tracks of the information recording medium. This may include a semiconductor laser element, a magnetic resistance element, a probe for applying heat to a recording medium, a probe for applying an electric field to a recording medium, and the like. Moreover, the structure of the probe is also not limited. It may be, for example, a bar-shaped probe using carbon nanotube, or may be a cantilever having a cantilever arm and a projection formed on the end portion of the cantilever arm.

As shown in FIG. 1, out of the plurality of recording / reading elements provided on the support portion, at least four recording / reading elements are arranged on the support portion such that if the positions of the recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if the ratio of the length of the line segment AB to the length of the line segment AC is η and the height of the parallelogram is H when the line segment AC is regarded as a base, the following relationship is satisfied,

$$H = \eta \cdot P \tag{1}$$

By providing such an array relationship for the at least four recording / reading elements, it is possible to place the recording / reading end portions of the recording / reading elements (e.g. the tip portions of probes) on the tracks of the information recording medium, as shown in FIG. 1. Namely, out of the four recording / reading elements, the recording / reading end portions (A, B) of two recording / reading elements can be placed on one track (Tr4), and the recording / reading end portions (C, D) of the remaining two recording / reading elements can be placed on another track (Tr3) adjacent to the one track.

This can be supported by the following calculation. Namely, as shown in FIG. 1, two of the four recording / reading elements are placed such that their recording / reading end portions (A, B) are superimposed on one track (Tr4), and the remaining two recording / reading elements are placed such that their recording / reading end portions (C, D) are placed on another track (Tr3) adjacent to the one track. Then, the positions A, B, C, and D of the four recording / reading end portions are placed to form a parallelogram in which the line segment AB is parallel to the line segment CD, and the line segment AC is parallel to the line segment BD. In this case, if the angle made by the line segment AC and the line segment CD is $\alpha$ and the length of the line segment AC is L, because the track pitch is P, the following relationship is satisfied:

$$L \cdot \sin\alpha = P \tag{2}$$

Moreover, if the length of the line segment AB (= the line segment CD) is K and the height of the parallelogram is H when the line segment AC is regarded as a base, the following relationship is satisfied,

$$K \cdot \sin\alpha = H \tag{3}$$

Then, if $\alpha$ is eliminated from the equation (2) and the equation (3), and the ratio (K/L) of the length K of the line segment AB to the length L of the line segment AC is regarded as η, the above equation (1) is obtained.

As described above, by placing the recording / reading end portions of two out of at least four recording / reading elements on one track and placing the recording / reading end portions of the remaining two recording / reading elements on another track, it is possible to realize the improvement of the information rrecording / eproducing speed and the improvement of the information recording / reproducing accuracy, in harmony. Namely, by placing the recording / reading end portion of one out of at least two recording / reading elements on one track and placing the recording / reading end portion of the other on another track, it is possible to record the information onto the two tracks at a time, or read the information recorded on the two tracks at a time. By this, it is possible to increase the information recording and reproducing speed, as compared to the case where the information recording and reproduction is performed only for a single track. On the other hand, by placing both recording / reading end portions of the at least two recording / reading elements on the same track, it is possible for one recording / reading element to record the information, and simultaneously, it is possible for the other recording / reading element to readily read the recorded information. Then, the information recording accuracy can be improved in the following construction; for example, on the basis of the information read by the other recording / reading element, it is confirmed whether or not the recording by the one recording / reading element is correctly performed, and if the recording is not correctly performed, the same information is recorded again. Moreover, by placing both recording / reading end portions of the at least two recording / reading elements on the same track, it is possible to simultaneously (continuously) read the information recorded on the same track, through the two recording / reading elements. Then, the information reproducing accuracy can be improved in the following constructions; two signals (e.g. pulse signals corresponding to the information) read by the two recording / reading elements are added after their time difference is adjusted, or a higher level signal is selected from the signals read by the two recording / reading elements. According to the first information recording / reading head, the recording / reading end portions of at least two recording / reading elements are separately placed on one track and another track, and the recording / reading end portions of at least two recording / reading elements are placed on the same track, so that it is possible to realize both the improvement of the information recording / reproducing speed and the improvement of the information recording / reproducing accuracy, and it is possible to increase properties of the information recording / reproduction, in harmony.

Moreover, since a plurality of recording / reading elements are assigned to the same track, even if there arise a defective in production and a failure caused by deterioration over time, in one portion of the recording / reading elements, it is possible to sufficiently record and read the information through another recording / reading element. Therefore, in the production of the information recording / reading head, even if there arises a defective in one portion of the recording / reading elements, this can be treated as a good product, as long as there is no problem in quality as a product due to the other normal information recording / reading elements. Therefore, it is possible to improve yields. Moreover, even if there arises a failure caused by deterioration over time in one portion of the recording / reading elements, the information recording / reproducing operation can be eventually performed without a hindrance in the end, as long as the other information recording / reading elements are normal. Therefore, it is possible to increase the durability of the information recording / reading head and extend its lifetime.

Incidentally, for convenience of explanation, FIG. 1 shows the positions of the recording / reading end portions of the four recording / reading elements, but the total number of the recording / reading elements arranged on the support portion of the first information recording / reading head is not limited to four. For example, nine information reading elements may be provided and arranged such that their recording / reading end portions are placed on three tracks, by three end portions on each track. Moreover, sixteen information reading elements may be provided and arranged such that their recording / reading end portions are placed on four tracks, by four end portions on each track. Moreover, sixteen information reading elements may be provided and arranged such that their recording / reading end portions are placed on eight tracks, by two end portions on each track, or such that their recording / reading end portions are placed on two tracks, by eight end portions on each track. Furthermore, $32 \times 32$ recording / reading elements may be provided, or $128 \times 128$ recording / reading elements may be provided. However, if such many recording / reading elements are provided, the entire recording / reading end portions of the recording / reading elements are not necessarily always placed on one or a plurality of tracks. For example, the recording / reading end portions of twelve of the sixteen recording / reading elements may be placed on the plurality of tracks, and the remaining four recording / reading elements may be placed between the tracks or out of the tracks. Moreover, in the example used for the explanation of the first embodiment, the four recording / reading elements are not necessarily the closest four recording / reading elements out of the many recording / reading elements.

(Second Embodiment)

The second embodiment of the present invention will be explained with reference to FIG. 1. The information recording / reading head in the second embodiment of the present invention (hereinafter referred to as a "second information recording / reading head") records information onto the tracks of the information recording medium having the tracks with a track pitch of P, or reads information recorded on the tracks of the information recording medium. The second recording / reading head is provided with: a support portion; and four or more recording / reading elements which are supported by the support portion and which record information onto the tracks of the information recording medium or which read information recorded on the tracks of the information recording medium. Then, at least four of the recording / reading elements are arranged on the support portion such that if the positions of the recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if the length of the line segment AC is L and the angle ACD made by the line segment AC and the line segment CD is $\alpha$, the following relationship is satisfied:

$$L \cdot \sin\alpha = P \qquad\qquad (4)$$

Even providing such an array relationship for the at least four recording / reading elements makes it possible to place the recording / reading end portions of the reading / recording elements on the tracks of the information recording medium, as shown in FIG. 1. Therefore, it is possible to realize the improvement of the information recording / reproducing speed and the improvement of the information recording / reproducing accuracy, in harmony. Moreover, since a plurality of recording / reading elements are assigned to the same track, as in the above-described first information recording / reading head, it is possible to improve the yield and increase the durability of the information recording / reading head. Incidentally, the total number of the recording / reading elements provided for the support portion is not limited to four, as in the case of the above-described first information recording / reading head.

(Third Embodiment)

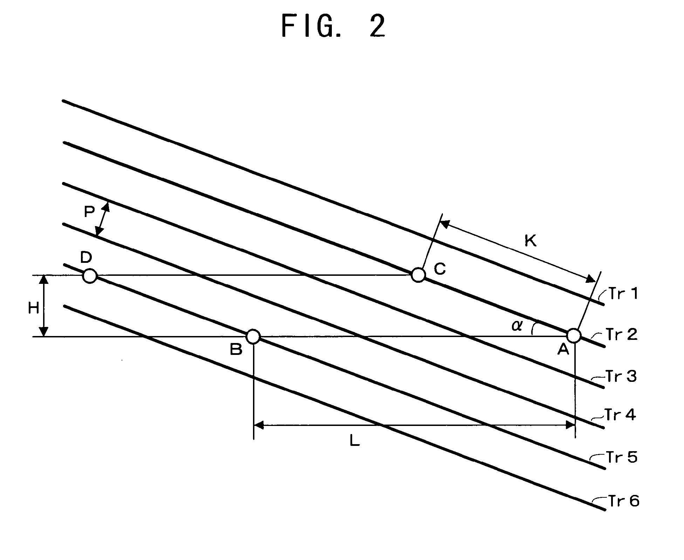

The third embodiment of the present invention will be explained with reference to FIG. 2. FIG. 2 shows the positions of recording / reading end portions of the recording / reading elements placed on an information recording / reading head in the third embodiment and a fourth embodiment of the present invention.

The information recording / reading head in the third embodiment of the present invention (hereinafter referred to as a "third information recording / reading head") records information onto the tracks of the information recording medium having the tracks with a track pitch of P, or reads information recorded on the tracks of the information recording medium. The third recording / reading head is provided with: a support portion; and four or more recording / reading elements which are supported by the support portion and which record information onto the tracks of the information recording medium or which read information recorded on the tracks of the information recording medium. Then, at least four of the recording / reading elements are arranged on the support portion such that if the positions of the recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if the ratio of the length of the line segment AB to the length of the line segment AC is $\eta$ and the height of the parallelogram is H when the line segment AC is regarded as a base, the following relationship is satisfied:

$$H = m \cdot \eta \cdot P \text{ (wherein m is a natural number)} \tag{5}$$

Even providing such an array relationship for the at least four recording / reading elements makes it possible to place the recording / reading end portions of the reading / recording elements (e.g. the tip portions of probes) on the tracks of the information recording medium, as shown in FIG. 2. Namely, out of the four recording / reading elements, the recording / reading end portions (A, B) of two recording / reading elements can be placed on one track (Tr5), and the recording / reading end portions (C, D) of the remaining two recording / reading elements can be placed on one track (Tr2). Incidentally, FIG. 2 shows an example when m=3, but by setting m for any natural number, it is possible to arbitrarily set the clearance of the recording / reading end portions of two recording / reading elements placed on the different tracks.

Even by the third information recording / reading head having such a structure, it is possible to realize the improvement of the information recording / reproducing speed and the improvement of the information recording / reproducing accuracy, in harmony. Moreover, since a plurality of recording / reading elements are assigned to the same track, as in the above-described first or second information recording / reading head, it is possible to improve the yield and increase the durability of the information recording / reading head. Furthermore, according to the third information recording / reading head, by setting m for any natural number, it is possible to arbitrarily set the clearance of the recording / reading end portions of two recording / reading elements placed on the different tracks. Thus, it is possible to arbitrarily set the arrangement of the recording / reading elements, so as to suit the convenience of the setting and production of the recording / reading head, and the convenience of the recording / reproduction system. Incidentally, the total number of the recording / reading elements provided for the support portion is not limited to four, as in the case of the above-described first or second information recording / reading head.

(Fourth Embodiment)

The fourth embodiment of the present invention will be explained with reference to FIG. 2. The information recording / reading head in the fourth embodiment of the present invention (hereinafter referred to as a "fourth information recording / reading head") records information onto the tracks of the information recording medium having the tracks with a track pitch of P, or reads information recorded on the tracks of the information recording medium. The third recording / reading head is provided with: a support portion; and four or more recording / reading elements which are supported by the support portion and which record information onto the tracks of the information recording medium or which read information recorded on the tracks of the information recording medium. Then, at least four of the recording / reading elements are arranged on the support portion such that if the positions of the recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if the length of the line segment AC is L and the angle ACD made by the line segment AC and the line segment CD is $\alpha$, the following relationship is satisfied:

$$L \cdot \sin \alpha = m \cdot P \text{ (where m is a natural number)} \tag{6}$$

Even by the fourth information recording / reading head having such a structure, it is possible to realize the improvement of the information recording / reproducing speed and the improvement of the information recording / reproducing accuracy, in harmony. At the same time, as in the above-described first to third information recording / reading heads, it is possible to improve the yield and increase the durability of the information recording / reading head. Furthermore, according to the fourth information recording / reading head, it is possible to arbitrarily set the arrangement of the recording / reading elements, so as to suit the convenience of the setting and production of the recording / reading head, and the convenience of the recording / reproduction system. Incidentally, the total number of the recording / reading elements provided for the support portion is not limited to four, as in the cases of the above-described first to third information recording / reading heads.

(Modified Embodiment of Information Recording / Reading Head)

Moreover, in any one of the above-described first to fourth information recording / reading heads, at least four recording / reading elements may be arranged on the support portion such that if the length of the line segment AC is L and the line segment CD is K, the following relationship is satisfied,

$$(n^2 \cdot K^2/L^2) + (H^2/K^2) \neq 1 \text{ (n is a natural number)} \tag{7}$$

Such a construction can prevent a square lattice from being formed in the array of the plurality of recording / reading elements arranged on the support portion of the information recording / reading head.

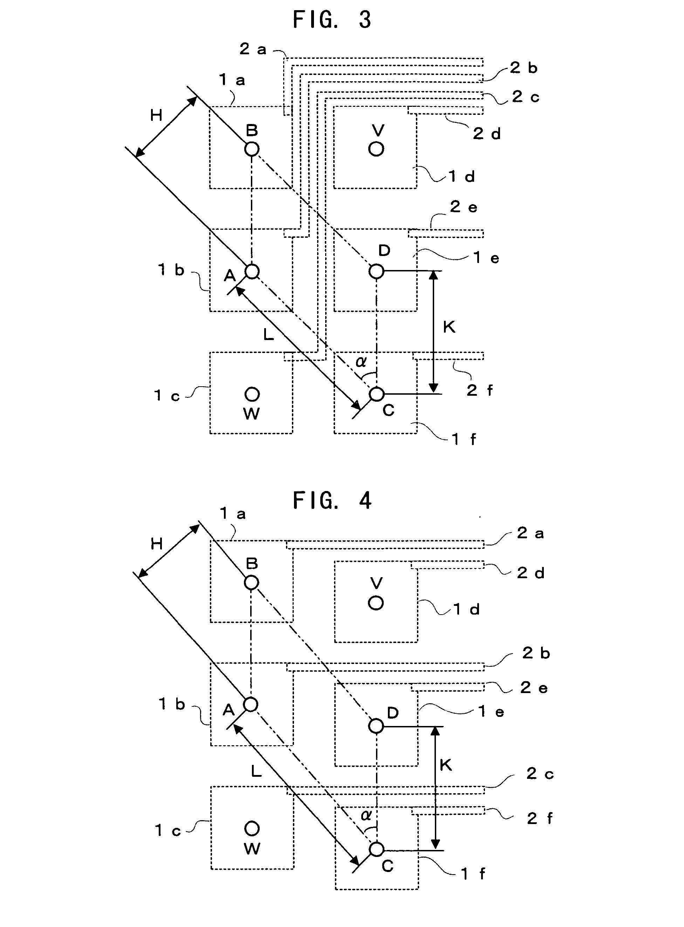

Hereinafter, the reason why it is possible to prevent a square lattice from being formed in the array of the plurality of recording / reading elements by that the above-described equation (7) holds true, will be explained with reference to FIG. 3 and FIG. 4. FIG. 3 and FIG. 4 show examples in which the information recording / reading head is provided with six recording / reading elements on the support portion and uses bar-shaped probes (formed of carbon nanotube, for example) as the recording / reading elements. FIG. 3 and FIG. 4 show each probe observed from the topside, and A, B, C, D, V, and W in FIG. 3 and FIG. 4 correspond to the positions of the tip portions (i.e. the recording / reading end portions) of the six probes. Moreover, FIG. 3 and FIG. 4 show probe electrodes 1a to If formed on the support portion of the information recording / reading head, and signal lines 2a to 2f connected to the probe electrodes 1a to 1f, respectively, with broken lines. The probes are fixed and electrically connected to the respective probe electrodes 1a to 1f.

FIG. 3 shows a specific example in the case where the equation (7) does not hold true in the arrangement of the six probes. Namely, in focusing on the positions A, B, C, and D of the tip portions of four of the six probes shown in FIG. 3, such a parallelogram that a line segment AB is parallel to a line segment CD and a line segment AC is parallel to a line segment BD is formed. If the length of the line segment AC is L, the length of the line segment CD is K, and the angle ACD made by the line segment AC and the line segment CD is $\alpha$, the following relationship holds:

$$L \cdot \cos\alpha = nK \text{ (wherein n is a natural number)} \tag{8}$$

(Incidentally, FIG. 3 shows an example in the case of n = 1). Moreover, if the height of the parallelogram is H when the line segment AC is regarded as a base, the following relationship holds,

$$K \cdot \sin\alpha = H \tag{9}$$

Then, if $\alpha$ is eliminated from the equation (8) and the equation (9), the following applies,

$$(n^2 \cdot K^2/L^2) + (H^2/K^2) = 1 \text{ (n is a natural number)} \tag{10}$$

(Incidentally, n = 1 in the example in FIG. 3). If the equation (10) holds true in the positions of the probe tip portions, a square lattice is formed in the array of the probes. For example, in FIG. 3, the positions A, B, D, V of the probe tip portions, and the positions A, C, D, and W form square lattices. As seen from the signal lines 2a to 2c, the formation of the square lattice in the array of the probes makes it difficult to connect and arrange the signal lines to the probe electrodes, or to secure a space for the signal lines. Moreover, the formation of the square lattice also causes such a disadvantage that the signal lines are made longer.

On the other hand, FIG. 4 shows a specific example in the case where the equation (7) holds true in the arrangement of the six probes. Namely, in focusing on the positions A, B, C, and D of the tip portions of four of the six probes shown in FIG. 4, a parallelogram is formed by using the positions. However, the equation (8) does not hold true, and the equation (10) does not hold true. Consequently, the equation (7) holds true. By determining the positions of the probe tip portions such that the equation (7) holds true, a square lattice is not easily formed in the array of the probes. By this, as seen from the signal lines 2a to 2f in FIG. 4, it is possible to connect and arrange the signal lines to the probe electrodes and narrow a space for the signal lines. It is also possible to shorten the signal lines. Furthermore, if the signal lines can be shortened, it is possible to reduce a noise on the signal lines.

(Fifth Embodiment)

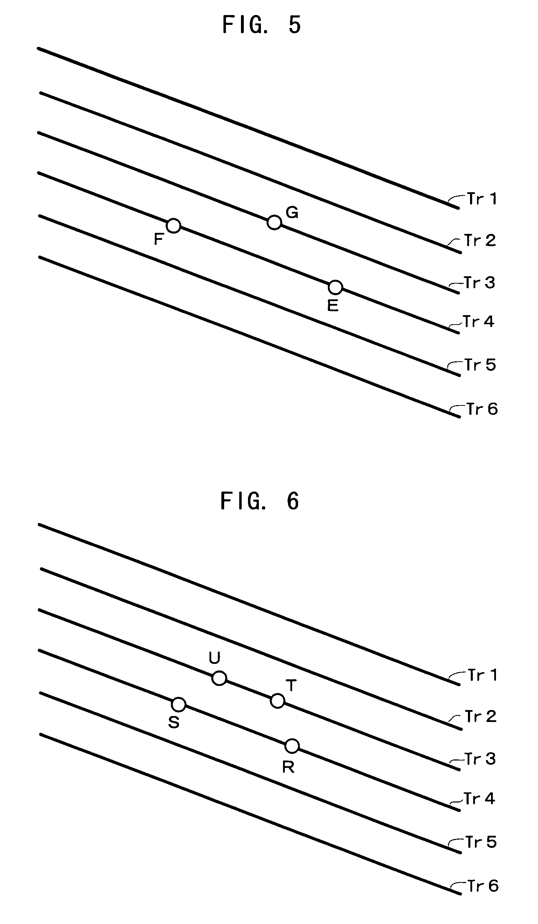

The fifth embodiment of the present invention will be explained with reference to FIG. 5. FIG. 5 shows the positions of the recording / reading end portions of recording / reading elements placed on an information recording / reading head in the fifth embodiment of the present invention.

The information recording / reading head in the fifth embodiment of the present invention (hereinafter referred to as a "fifth information recording / reading head") records information onto the tracks of the information recording medium, or reads information recorded on the tracks of the information recording medium. The fifth recording / reading head is provided with: a support portion; and three or more recording / reading elements which are supported by the support portion and which record information onto the tracks of the information recording medium or which read information recorded on the tracks of the information recording medium. Then, at least three of the recording / reading elements are arranged on the support portion such that when the recording / reading end portions of two of the three recording / reading elements are positioned on one track, the recording / reading end portion of the remaining one of the three recording / reading elements is placed on another track.

Namely, as shown in FIG. 5, out of at least three recording / reading elements, two recording / reading elements are placed such that the positions E and F of their recording / reading end portions are on one track Tr4. Moreover, the remaining one recording / reading element is placed such that the position G of its recording / reading end portion is on another track Tr3.

As described above, by placing the recording / reading end portions of two out of at least three recording / reading elements on one track and placing the recording / reading end portion of the remaining one recording / reading element on another track, it is possible to realize the improvement of the information recording / reproducing speed and the improvement of the information recording / reproducing accuracy, in harmony, in substantially the same manner as the above-described first to fourth information recording / reading heads. Moreover, since a plurality of recording / reading elements are assigned to the same track, as in the above-described first to fourth information recording / reading heads, it is possible to improve the yield and increase the durability of the information recording / reading head. Incidentally, the total number of the recording / reading elements provided for the support portion is not limited to three.

(Sixth Embodiment)

The sixth embodiment of the present invention will be explained with reference to FIG. 6. FIG. 6 shows the positions of the recording / reading end portions of recording / reading elements placed on an information recording / reading head in the sixth embodiment of the present invention.

The information recording / reading head in the sixth embodiment of the present invention (hereinafter referred to as a "sixth information recording / reading head") records information onto the tracks of the information recording medium, or reads information recorded on the tracks of the information recording medium. The sixth recording / reading head is provided with: a support portion; and four or more recording / reading elements which are supported by the support portion and which record information onto the tracks of the information recording medium or which read information recorded on the tracks of the information recording medium. Then, at least four of the recording / reading elements are arranged on the support portion such that when the recording / reading end portions of two of the four recording / reading elements are positioned on one track, the recording / reading end portions of the remaining two of the four recording / reading elements are placed on another track.

Namely, as shown in FIG. 6, out of at least four recording / reading elements, two recording / reading elements are placed such that the positions R and S of their recording / reading end portions are on one track (Tr4). Moreover, the remaining two recording / reading elements are placed such that the positions T and U of their recording / reading end portions are on another track (Tr3). Incidentally, the four recording / reading elements may not be placed such that the positions of their respective recording / reading end portions form a parallelogram.

As described above, by placing the recording / reading end portions of two out of at least four recording / reading elements on one track and placing the recording / reading end portion of the remaining two recording / reading elements on another track, it is possible to realize the improvement of the information recording / reproducing speed and the improvement of the information recording / reproducing accuracy, in harmony, as in the above-described first to fourth information recording / reading heads. Moreover, since a plurality of recording / reading elements are assigned to the same track, as in the above-described first to fifth information recording / reading heads, it is possible to improve the yield and increase the durability of the information recording / reading head. Incidentally, the total number of the recording / reading elements provided for the support portion is not limited to four, as in the cases of the above-described first to fourth information recording / reading heads.

Moreover, in the sixth recording / reading head, at least four recording / reading elements may be arranged on the support portion such that a parallelogram is formed in which a line segment RS connecting R and S that are the positions of the recording / reading end portions of the two recording / reading elements positioned on one track is parallel to a line segment TU connecting T and U that are the positions of the recording / reading end portions of the two recording / reading elements positioned on another track, and a line segment RT connecting R and T is parallel to a line segment SU connecting S and U.

Moreover, in the fifth or sixth recording / reading head shown in FIG. 5 or FIG. 6, the one track and the another track, in each of which the recording / reading end portion of the recording / reading element is placed, are next to each other. However, the present invention is not limited to this. The one track and the another track may be apart from each other, with one or a plurality of tracks between them.

(Seventh Embodiment)

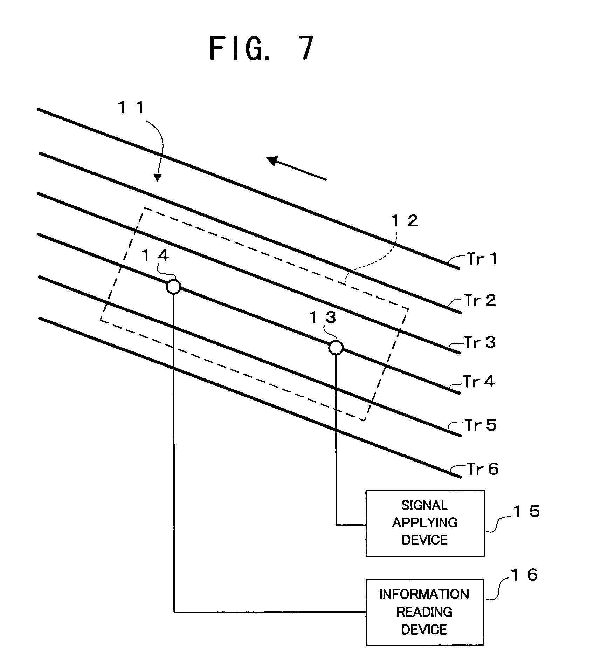

The seventh embodiment of the present invention will be explained with reference to FIG. 7. FIG. 7 shows the structure of an information recording / reproducing apparatus in the seventh embodiment of the present invention.

The information recording / reproducing apparatus in the seventh embodiment of the present invention (hereinafter referred to as a "first information recording / reproducing apparatus") records information onto the tracks of the information recording medium, or reads information recorded on the tracks of the information recording medium. Incidentally, the embodiments of the information to be recorded and reproduced and an information recording medium are the same as those in the first embodiment.

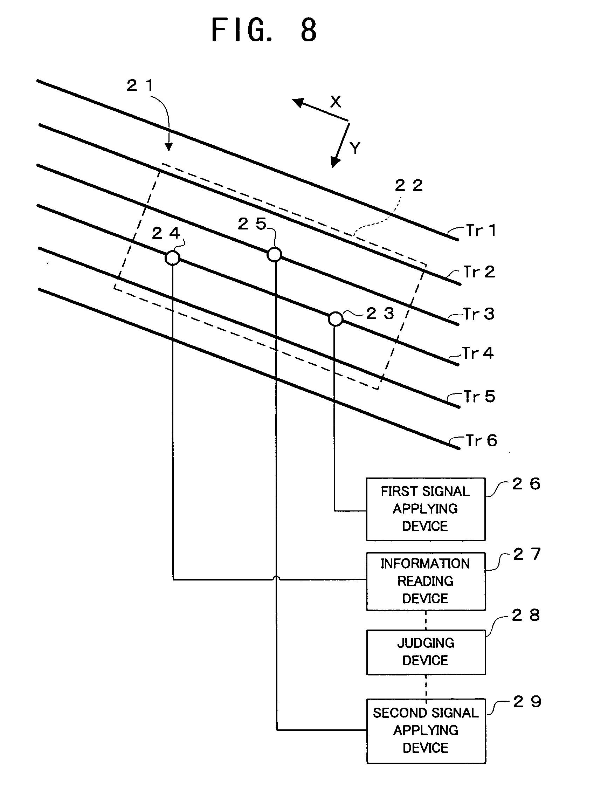

As shown in FIG. 7, the first information recording / reproducing apparatus is provided with an information recording / reading head 11. The information recording / reading head 11 is provided with: a support portion 12; and two or more recording / reading elements which are supported by the support portion 12 and which record information onto the tracks of the information recording medium or which read information recorded on the tracks of the information recording medium. Out of the recording / reading elements, at least two recording / reading elements 13 and 14 are arranged on the support portion 12 such that their recording / reading end portions are placed on one track (Tr4). Incidentally, FIG. 7 shows an example in which bar-shaped probes, formed of carbon nanotube or the like, are used as the recording / reading elements 13 and 14. However, the shape and structure of the individual recording / reading element, the material of the support portion, and the like are not particularly limited, as in the first embodiment. The same is true in second to fourth information reproducing apparatuses (FIG. 8 to FIG. 10) described below.

Moreover, the first information recording / reproducing apparatus is provided with: a signal applying device 15 which applies a signal corresponding to information, to any one of the recording / reading elements 13 and 14, in order to record the information onto the tracks of the information recording medium through the one recording / reading element; and an information reading device 16 which readily reads information recorded on the tracks of the information recording medium by the signal applying device 15, through the other recording / reading element out of the two recording / reading elements 13 and 14.

For example, as shown in FIG. 7, the recording / reading element 13 is connected to the signal applying device 15. The signal applying device 15 applies a signal corresponding to information, to the recording / reading element 13, to thereby record the information onto the tracks of the information recording medium. Moreover, the recording / reading element 14 is connected to the information reading device 16. The information reading device 16 readily reads information recorded on the tracks of the information recording medium by the recording / reading element 13, through the recording / reading element 14. This series of record and read operations can be realized in the case where the information recording medium is displaced in the direction of an arrow in FIG. 7 with respect to the information recording / reading head 11, for example. Of course, this can be also realized even in the case where the information recording / reading head 11 is displaced in a direction opposite to the direction of the arrow in FIG. 7 with respect to the information recording medium.

The information read by the information reading device 16 through the recording / reading element 14 can be used to confirm whether or not the information recorded by the signal applying device 15 through the recording / reading element 13 is correctly recorded, for example. If the information is not correctly recorded, the same information is recorded again into the information recording medium. By this, it is possible to improve the information recording and reproduction accuracy. On the other hand, it is also possible to reproduce the information, which is read by the information reading device 15 through the recording / reading element 14, immediately after recording of the information.

Such a construction allows the simultaneous recording and reproduction of the information.

(Eighth Embodiment)

The eighth embodiment of the present invention will be explained with reference to FIG. 8. FIG. 8 shows the structure of an information recording / reproducing apparatus in the eighth embodiment of the present invention.
As shown in FIG. 8, the information recording / reproducing apparatus in the eighth embodiment of the present invention (hereinafter referred to as a "second information recording / reproducing apparatus") is provided with an information recording / reading head 21. The information recording / reading head 21 is provided with: a support portion 22; and three or more recording / reading elements which are supported by the support portion 22 and which record information onto the tracks of an information recording medium or which read information recorded on the tracks of the information recording medium. Out of the recording / reading elements, at least three recording / reading elements 23, 24, and 25 are arranged on the support portion such that if the recording / reading end portions of the two recording / reading elements 23 and 24 out of the three recording / reading elements are positioned on one track (Tr4), the recording / reading end portion of the remaining one recording / reading element 25 of the three is placed on another track (Tr3).
Moreover, the second information recording / reproducing apparatus is provided with: a first signal applying device 26 which applies a signal corresponding to the information, to any one of the two recording / reading element 23 and 24 placed on one track, in order to record the information onto the one track through the one recording / reading element; an information reading device 27 which readily reads the information recorded on the one track by the first signal applying device 26, through the other recording / reading element out of the two recording / reading elements 23 and 24 placed on the one track; a judging device 28 which judges whether or not the recording of the information by the first signal applying device 26 is correctly performed, on the basis of the information read by the information reading device 27; and a second signal applying device 29 which applies a signal corresponding to the information, to the remaining one recording / reading element 25, in order to record the information again onto the one track through the remaining one recording / reading element 25, if the recording of the information by the first signal applying device 26 is not correctly performed.
For example, as shown in FIG. 8, the recording / reading element 23 is connected to the first signal applying device 26. The first signal applying device 26 applies a signal corresponding to the information, to the recording / reading element 23, to thereby record the information onto one track of the information recording medium. Moreover, the recording / reading element 24 is connected to the information reading device 27. The information reading device 27 readily reads the information recorded on the one track of the information recording medium by the recording / reading element 23, through the recording / reading element 24. This series of record and read operations can be realized in the case where the information recording medium is displaced in the direction of an arrow X in FIG. 8 with respect to the information recording / reading head 21, for example. Of course, this can be also realized even in the case where the information recording / reading head 21 is displaced in a direction opposite to the direction of the arrow X in FIG. 8 with respect to the information recording medium. The judging device 28 judges whether or not the recording of the information by the first signal applying device 26 is correctly performed, on the basis of the information read by the information reading device 27. If the recording of the information by the first signal applying device 26 is not correctly performed, the second signal applying device 29 applies a signal corresponding to the information which was not correctly recorded, to the recording / reading element 25. This application is performed when the information recording / reading head 21 is displaced in the direction of an arrow Y in FIG. 8 on the information recording medium and the recording / reading element 25 is placed on one track (Tr4). Of course, the signal may be applied when the information recording medium is displaced in a direction opposite to the direction of the arrow Y in FIG. 8 with respect to the information recording / reading head 21 and the recording / reading element 25 is placed on one track (Tr4). By this, it is possible to improve the information recording accuracy. Moreover, since the information can be recorded again without jumping the tracks, it is possible to increase the information recording speed.

(Ninth Embodiment)

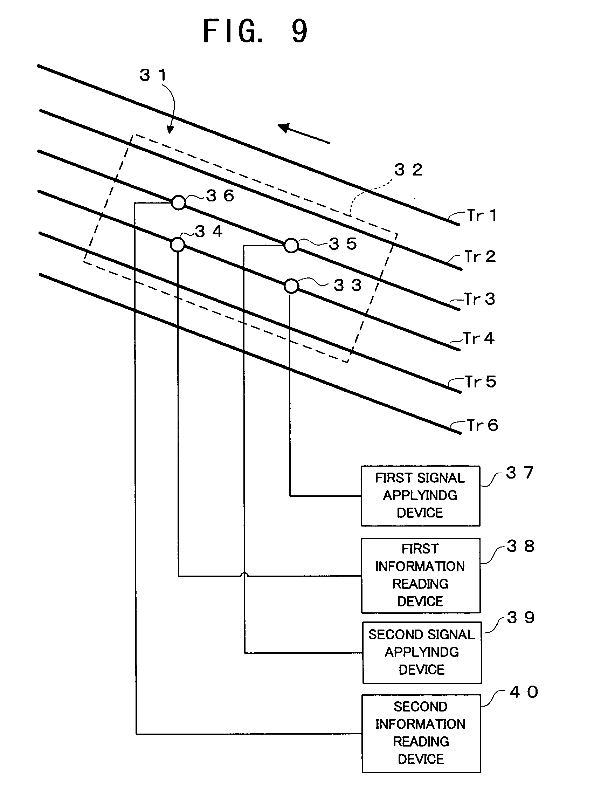

The ninth embodiment of the present invention will be explained with reference to FIG. 9. FIG. 9 shows the structure of an information recording / reproducing apparatus in the ninth embodiment of the present invention.
As shown in FIG. 9, the information recording / reproducing apparatus in the ninth embodiment of the present invention (hereinafter referred to as a "third information recording / reproducing apparatus") is provided with an information recording / reading head 31. The information recording / reading head 31 is provided with: a support portion 32; and four or more recording / reading elements which are supported by the support portion 32 and which record information onto the tracks of an information recording medium or which read information recorded on the tracks of the information recording medium. Out of the recording / reading elements, at least four recording / reading elements 33 to 36 are arranged on the support portion 32 such that if the recording / reading end portions of the two recording / reading elements 33 and 34 out of the four recording / reading elements 33 to 36 are positioned on one track (Tr4), the recording / reading end portions of the remaining two recording / reading elements 35 and 36 out of the four are placed on another track (Tr3).

Moreover, the third information recording / reproducing apparatus is provided with: a first signal applying device 37 which applies a signal corresponding to one portion of the information, to any one of the recording / reading elements 33 and 34 placed on one track, in order to record the one portion of the information onto the one track through the one recording / reading element; a first information reading device 38 which readily reads the one portion of the information recorded on the one track by the first signal applying device 37, through the other recording / reading element out of the two recording / reading elements 33 and 34 placed on the one track; a second signal applying device 39 which applies a signal corresponding to another portion of the information, to any one of the recording / reading elements 35 and 36 placed on another track, in order to record the another portion of the information onto the another track through the one recording / reading element; and a second information reading device 40 which readily reads the another portion of the information recorded on the another track by the second signal applying device 39, through the other recording / reading element out of the two recording / reading elements 35 and 36 placed on the another track.

For example, as shown in FIG. 9, the recording / reading element 33 is connected to the first signal applying device 37. The first signal applying device 37 applies a signal corresponding to information, to the recording / reading element 33, to thereby record the information onto one track (Tr4) of the information recording medium. Moreover, the recording / reading element 34 is connected to the information reading device 38. The information reading device 38 readily reads the information recorded on the one track by the recording / reading element 33, through the recording / reading element 34. On the other hand, the recording / reading element 35 is connected to the second signal applying device 39. The second signal applying device 39 applies a signal corresponding to information, to the recording / reading element 35, to thereby record the information onto another track (Tr3) of the information recording medium. Moreover, the recording / reading element 36 is connected to the information reading device 40. The information reading device 40 readily reads the information recorded on the another track by the recording / reading element 35, through the recording / reading element 36. As the record and read operations by the first signal applying device 37 and the first reading device 38 are performed, the record and read operations by the second signal applying device 39 and the second reading device 40 are performed simultaneously. At this time, the information recording medium is displaced in the direction of an arrow in FIG. 9 with respect to the information recording / reading head 31. Of course, the information recording / reading head 31 may be displaced in a direction opposite to the direction of the arrow in FIG. 9 with respect to the information recording medium.

The information read by the first information reading device 38 can be used to confirm whether or not the information recorded by the first signal applying device 37 is correctly recorded, for example. Moreover, the information read by the second information reading device 40 can be used to confirm whether or not the information recorded by the second signal applying device 39 is correctly recorded, for example. If either or both information is not correctly recorded, the same information is recorded again into the information recording medium. By this, it is possible to improve the information recording and reproduction accuracy.

(Tenth Embodiment)

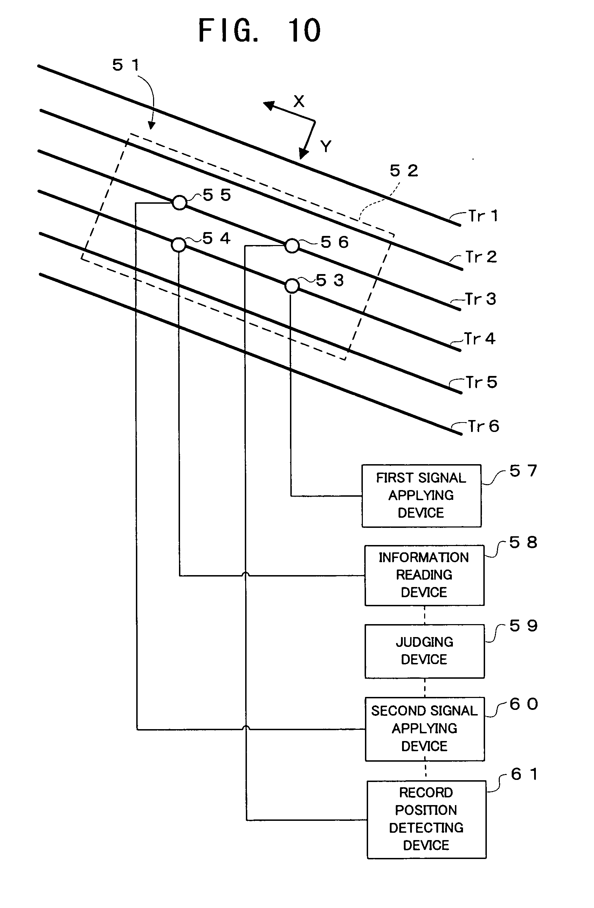

The tenth embodiment of the present invention will be explained with reference to FIG. 10. FIG. 10 shows the structure of an information recording / reproducing apparatus in the tenth embodiment of the present invention.

As shown in FIG. 10, the information recording / reproducing apparatus in the tenth embodiment of the present invention (hereinafter referred to as a "fourth information recording / reproducing apparatus") is provided with an information recording / reading head 51. The information recording / reading head 51 is provided with: a support portion 52; and four or more recording / reading elements which are supported by the support portion 52 and which record information onto the tracks of an information recording medium or which read information recorded on the tracks of the information recording medium. Out of the recording / reading elements, at least four recording / reading elements 53 to 56 are arranged on the support portion 52 such that if the recording / reading end portions of the two recording / reading elements 53 and 54 out of the four are positioned on one track, the recording / reading end portions of the remaining two recording / reading elements 55 and 56 out of the four are placed on another track.

Moreover, the fourth information recording / reproducing apparatus is provided with: a first signal applying device 57 which applies a signal corresponding to information, to any one of the recording / reading elements 53 and 54 placed on one track, in order to record the information onto the one track through the one recording / reading element; an information reading device 58 which readily reads the information recorded on the one track by the first signal applying device 57, through the other recording / reading element out of the two recording / reading elements 53 and 54 placed on the one track; a judging device 59 which judges whether or not the recording of the information by the first signal applying device 57 is correctly performed, on the basis of the information read by the information reading device 58; a second signal applying device 60 which applies a signal corresponding to the information, to any one of the remaining two recording / reading elements 55 and 56, in order to record the information again onto the one track through the one recording / reading element; and a record position detecting device 61 which detects a record position on the one track of the information to be recorded by the second signal applying device 60, through the other recording / reading element out of the two recording / reading elements 55 and 56.

For example, as shown in FIG. 10, the recording / reading element 53 is connected to the first signal applying device 57. The first signal applying device 57 applies a signal corresponding to information, to the recording / reading element 53, to thereby record the information onto one track of the information recording medium. Moreover, the recording / reading element 54 is connected to the information reading device 58. The information reading device 58 readily reads the information recorded on the one track of the information recording medium by the recording / reading element 53, through the recording / reading element 54. This series of record and read operations can be realized in the case where the information recording medium is displaced in the direction of an arrow X in FIG. 10 with respect to the information recording / reading head 51, for example. Of course, this can be also realized even in the case where the information recording / reading head 51 is displaced in a direction opposite to the direction of the arrow X in FIG. 10 with respect to the information recording medium. The judging device 59 judges whether or not the recording of the information by the first signal applying device 57 is correctly performed, on the basis of the information read by the information reading device 58. If the recording of the information by the first signal applying device 57 is not correctly performed, the second signal applying device 60 applies a signal corresponding to the information which was not correctly recorded, to the recording / reading element 55. At this time, the information recording / reading head 51 is displaced in the direction of an arrow Y in FIG. 10 with respect to the information recording medium. The application of the signal to the recording reading element 55 is performed when the recording / reading element 55 is placed on one track (Tr4). Of course, the signal may be applied when the information recording medium is displaced in a direction opposite to the direction of the arrow Y in FIG. 10 with respect to the information recording / reading head 51 and the recording / reading element 55 is placed on the one track (Tr4). At this time, the record position detecting device 61 detects a position where the information is to be recorded again, through the recording / reading element 56. The second signal applying device 60 recognizes the position where the information is to be recorded again, on the basis of the detection result of the record position detecting device 61, to thereby record the information again. By this, it is possible to improve the information recording accuracy. Moreover, since the information can be recorded again without jumping the tracks, it is possible to increase the information recording speed.

Incidentally, as the information recording / reading head of the third or fourth information recording / reproducing apparatus, it is also possible to use the above-described first to fourth information recording / reading heads (including the above-described modified embodiment).


(Eleventh Embodiment)

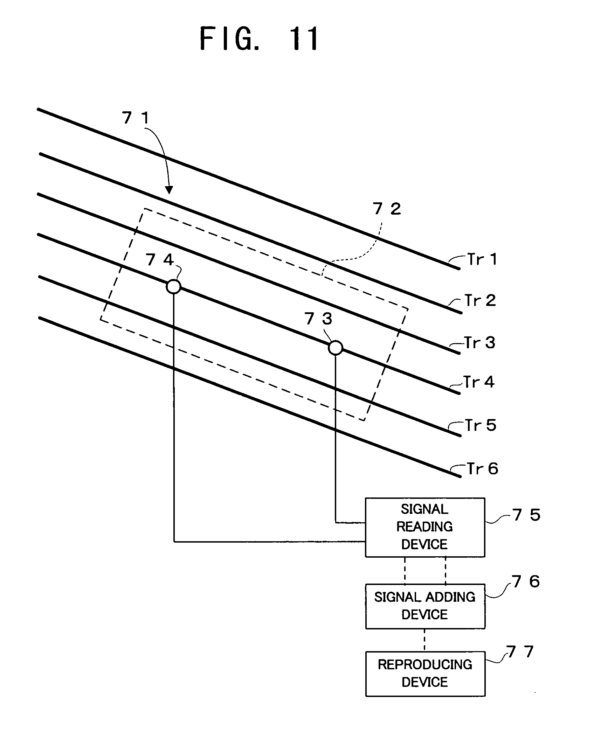

The eleventh embodiment of the present invention will be explained with reference to FIG. 11. FIG. 11 shows the structure of an information reproducing apparatus in the eleventh embodiment of the present invention.

The information reproducing apparatus in the eleventh embodiment of the present invention (hereinafter referred to as a "first information reproducing apparatus") reproduces information recorded on the tracks of an information recording medium. Incidentally, the embodiments of the information to be recorded and reproduced and the information recording medium are the same as those in the first embodiment.

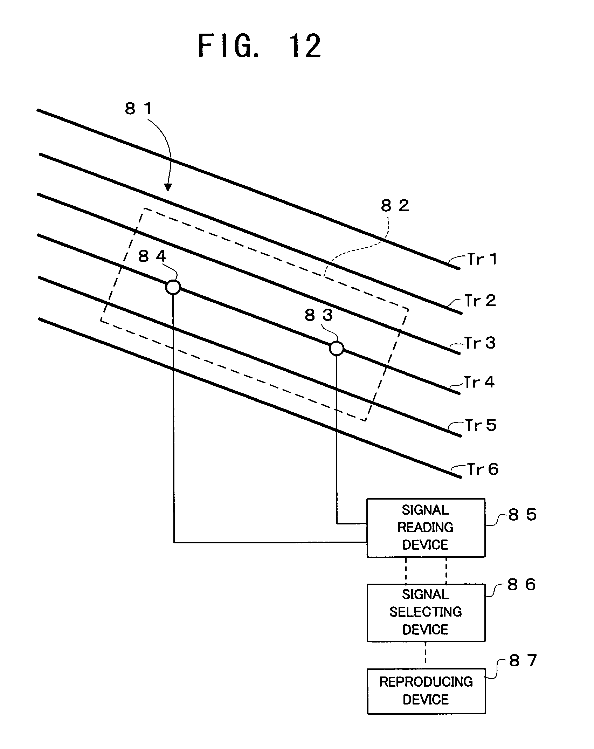

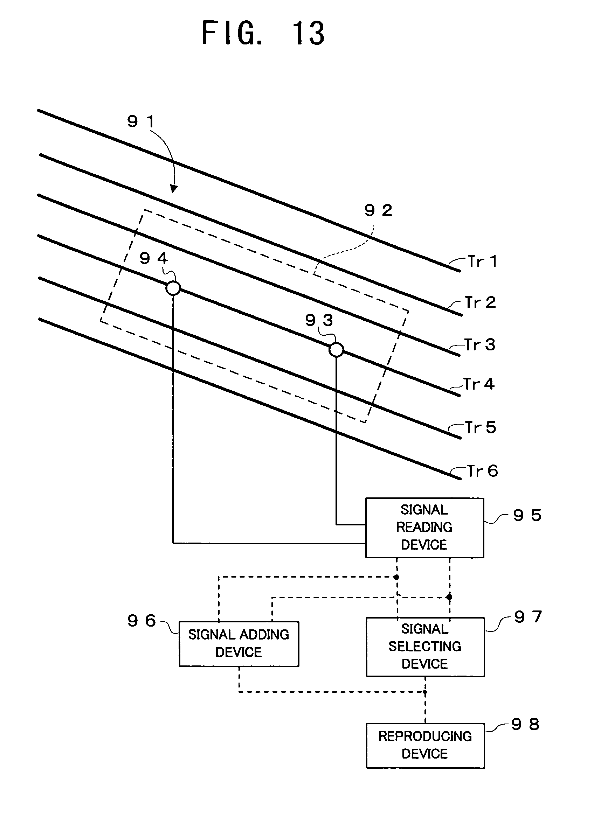

As shown in FIG. 11, the first information reproducing apparatus is provided with an information recording / reading head 71. The information reading head 71 is provided with: a support portion 72; and two or more reading elements which are supported by the support portion 72 and which read information recorded on the tracks of the information recording medium. Out of the reading elements, at least two reading elements 73 and 74 are arranged on the support portion 72 such that their reading end positions are placed on one track. Incidentally, FIG. 11 shows an example in which bar-shaped probes, formed of carbon nanotube or the like, are used as the reading elements 73 and 74. However, the shape and structure of the individual reading element, the material of the support portion, and the like are not particularly limited, as in the first embodiment. The same is true in second and third information reproducing apparatuses (FIG. 12 and FIG. 13) described below.

Moreover, the first information reproducing apparatus is provided with: a signal reading device 75 in which the two reading elements 73 and 74 individually read the same information recorded at the same place on the track of the information recording medium, to thereby obtain two reading signals corresponding to the same information; a signal adding device 76 which adds the two reading signals obtained by the signal reading device 75 to each other, after the difference at a reading time point of the two reading elements 73 and 74 is adjusted; and a reproducing device 77 which reproduces the information, on the basis of the reading signal added by the signal adding device 76.

In the signal reading device 75, through the at least two reading elements 73 and 74 placed on the same track, the information recorded on the same track is read simultaneously. The reading elements 73 and 74 are placed on the same track, so that it is possible to read the same information recorded on the same track by using the reading elements 73 and 74. The information read by the reading elements 73 and 74 is supplied to the signal adding device 76, as respective reading signals. The signal adding device 76 adds the two reading signals, to each other. By this, the level (or amplitude) of the reading signal is doubled, so that it is possible to secure the level in a proper degree, even if the level of the reading signal is small due to troubles, for example. The reading elements 73 and 74 are at different positions on the same track, which causes a time difference between the reading signal read by the reading element 73 and the reading signal read by the reading element 74. Thus, the signal adding device 76 adjusts either or both of the reading signals, in order to eliminate the time difference, before adding the two reading signals. Then, the reproducing device 77 reproduces the information, on the basis of the reading signal added by the signal adding device 76. As described above, the double or multiple reading of information is performed. Two or more reading signals obtained by the double of multiple reading of information are added to each other, to increase the level of the reading signal. On the basis of the reading signal, the information is reproduced. Thus, it is possible to improve an information reproducing accuracy.

(Twelfth Embodiment)

The twelfth embodiment of the present invention will be explained with reference to FIG. 12. FIG. 12 shows the structure of an information reproducing apparatus in the twelfth embodiment of the present invention.

As shown in FIG. 12, the information reproducing apparatus in the twelfth embodiment of the present invention (hereinafter referred to as a "second information reproducing apparatus") is provided with an information recording / reading head 81. The information reading head 81 is provided with: a support portion 82; and two or more reading elements which are supported by the support portion 82 and which read information recorded on the tracks of the information recording medium. Out of the reading elements, at least two reading elements 83 and 84 are arranged on the support portion 82 such that their reading end positions are placed on one track.

Moreover, the second information reproducing apparatus is provided with: a signal reading device 85 in which the two reading elements 83 and 84 individually read the same information recorded at the same place on the track of the information recording medium, to thereby obtain two reading signals corresponding to the same information; a signal selecting device 86 which selects any one of the two reading signals obtained by the signal reading device 85; and a reproducing device 87 which reproduces the information, on the basis of the reading signal selected by the signal selecting device 86.

In the signal reading device 85, through the at least two reading elements 83 and 84 placed on the same track, the information recorded on the same track is read simultaneously. The information read by the signal reading device 85 is supplied to the signal selecting device 86, as respective reading signals. The signal selecting device 86 selects a reading signal proper for the basis of the information reproduction, out of the two reading signals. The reproducing device 87 reproduces the information, on the basis of the reading signal selected by the signal selecting device 86. For example, in the signal selecting device 86, if such a construction is adopted that a higher level (amplitude) reading signal is selected from the two reading signals, or that a reading signal with a less noise component is selected, even if a trouble occurs in the read operation by one of the two reading elements, it is possible to correctly reproduce the information on the basis of a reading signal obtained by the other reading element. By this, it is possible to improve the information reproducing accuracy.

(Thirteenth Embodiment)

The thirteenth embodiment of the present invention will be explained with reference to FIG. 13. FIG. 13 shows the structure of an information reproducing apparatus in the thirteenth embodiment of the present invention.

As shown in FIG. 13, the information reproducing apparatus in the thirteenth embodiment of the present invention (hereinafter referred to as a "third information reproducing apparatus") is provided with an information recording / reading head 91. The information reading head 91 is provided with: a support portion 92; and two or more reading elements which are supported by the support portion 92 and which read the information recorded on the tracks of the information recording medium. Out of the reading elements, at least two reading elements 93 and 94 are arranged on the support portion 92 such that their reading end positions are placed on one track.

Moreover, the third information reproducing apparatus is provided with: a signal reading device 95 in which the two reading elements 93 and 94 individually read the same information recorded at the same place on the track of the information recording medium, to thereby obtain two reading signals corresponding to the same information; a signal adding device 96 which adds the two reading signals obtained by the signal reading device 95 to each other, after the difference at a reading time point of the two reading elements 93 and 94 is adjusted, if both levels of the two reading signals reach a predetermined level; a signal selecting device 97 which selects a higher level reading signal from the two reading signals obtained by the signal reading device 95, if either or both levels of the two reading signals do not reach the predetermined level; and a reproducing device 97 which reproduces the information, on the basis of the reading signal added by the signal adding device 96 or the reading signal selected by the signal selecting device 97.

In the signal reading device 95, through the at least two reading elements 93 and 94 placed on the same track, the information recorded on the same track is read simultaneously. The information read by the signal reading device 95 is supplied to the signal adding device 96, as respective reading signals. At the same time, the reading signals are also supplied to the signal selecting device 97.

The signal adding device 96 adds the both reading signals to each other, after the time difference of the both reading signals is adjusted, if both levels of the two reading signals reach a predetermined level. On the other hand, the signal selecting device 86 selects a higher level reading signal from the two reading signals, if either or both levels of the two reading signals do not reach the predetermined level. By this, even if the level of one or both of the two reading signals is low, it is possible to select as a high level reading signal as possible and use it as the basis of the information reproduction.

The reproducing device 98 reproduces the information, on the basis of the reading signal added by the signal applying device 96 or the reading signal selected by the signal selecting device 97.

Even by virtue of the third information reproducing apparatus having this structure, it is possible to improve the information reproducing accuracy.

Incidentally, the above-described first to fourth information recording / reading heads can be applied to the first to third information reproducing apparatus. In this case, the first to fourth information recording / reading heads have at least four recording / reading elements. If the at least four recording / reading elements are divided into two pairs, to thereby provide two pairs of the signal reading device, the signal adding device, the signal selecting device, the reproducing device, and the like, described above, it is possible to improve the information reproducing accuracy, as well as an information reproducing speed.

(Examples)

The examples of the present invention will be explained with reference to the drawings. In the examples below, the information recording / reading head and the information recording / reproducing apparatus of the present invention are applied to an information recording / reproducing apparatus which uses the SNDM.

Firstly, the structure of the information recording / reproducing apparatus in an example of the present invention will be explained.

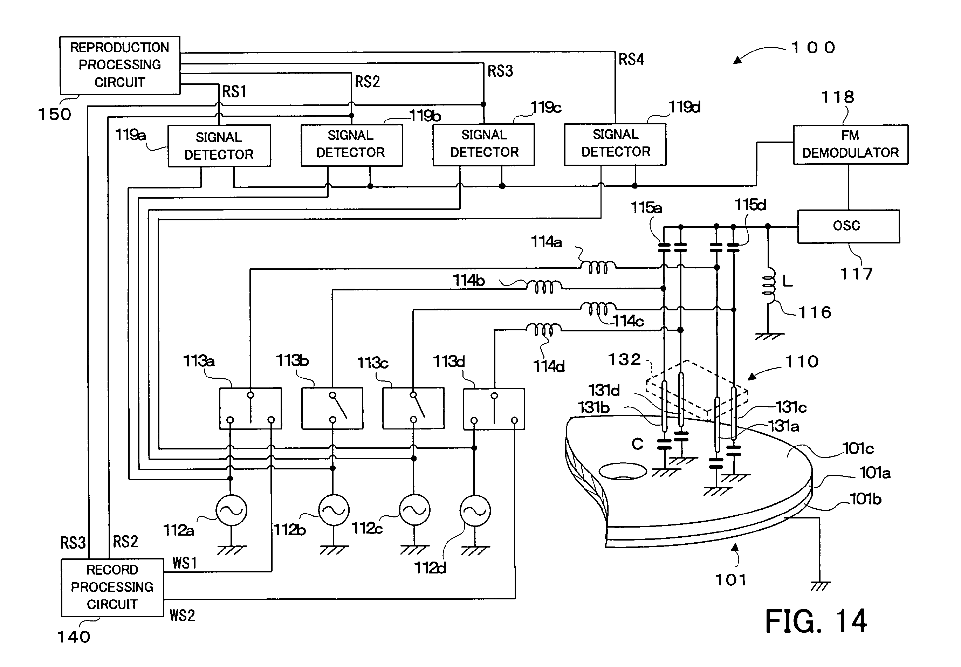

FIG. 14 shows the structure of the information recording / reproducing apparatus in the example of the present invention. As shown in FIG. 14, an information recording / reproducing apparatus 100 in the example of the present invention records information onto the tracks of an information recording medium 101 or reads information recorded on the tracks of the information recording medium 101. The information recording / reproducing apparatus 100 uses the SNDM, as recording and reproducing methods.

The information recording medium 101 is provided with a ferroelectric film 101a made of a ferroelectric material, and a back plate 101b. The information recording medium 101 is disk-shaped as a whole. The surface of the ferroelectric film 101a is a recording surface 101c, and concentric or spiral tracks are formed on the recording surface 101c. Moreover, the back plate is earthed.

The information recording / reproducing apparatus 100 is provided with: an information recording / reading head 110; a record processing circuit 140; alternating current (AC) signal generators 112a to 112d; switches 113a to 113d; first inductors 114a to 114b; condensers 115a to 115d; a second inductor 116; an oscillator 117; a Frequency Modulation (FM) demodulator 118; signal detectors 119a to 119d; and a reproduction processing circuit 150. The information recording / reading head 110 has four probes 131a to 131d, so that the AC signal generators 112a to 112d, the switches 113a to 113d, the first inductors 114a to 114b, the condensers 115a to 115d, and the signal detectors 119a to 119d are provided by four. Incidentally, the inductors and condensers may be constructed by using the self-inductance or capacitance of the probe head (i.e. the information recording / reading head) without using parts particularly.

Secondly, the principle of the information recording on the information recording / reproducing apparatus 100 will be explained. Incidentally, for convenience of explanation, such an example is given that the information is recorded through the probe 131a out of the four probes 131a to 131d of the information recording / reading head 110.

The record processing circuit 140 generates a recording signal (i.e. a pulse signal) corresponding to information to be recorded. In recording the information into the information recording medium 101, the switch 113a is changed over to connect the record processing circuit 140 and the first inductor 114a. By this, the recording signal outputted from the record processing circuit 140 passes through the switch 113a and the first inductor 114a, is supplied to the probe 131a of the information recording / reading head 110, and is applied to the ferroelectric film 101a of the information recording medium 101. By this, the polarization state of the ferroelectric film 101a at a position facing the tip portion of the probe 131a is set in response to the recording signal. When the application of the recording signal is performed in this manner, the information recording medium 101 is being rotated by the drive of a not-illustrated spindle motor or the like, and the information recording / reading head 110 is displaced in the radial direction of the information recording medium 101, under the control of a not-illustrated servo control apparatus. By this, the information is recorded into the information recording medium 101, as the polarization state of the ferroelectric film 101a.

Next, the principle of the information reproduction on the information recording / reproducing apparatus 100 will be explained. Incidentally, for convenience of explanation, such an example is given that the information is recorded through the probe 131a out of the four probes 131a to 131d of the information recording / reading head 110.

In reproducing the information, the switch 113a is changed over to connect the AC signal generator 112a and the first inductor 114a. By this, an AC signal generated by the AC signal generator 112a passes through the switch 113a and the first inductor 114a, is supplied to the probe 131a of the information recording / reading head 110, and is applied to the ferroelectric film 101a of the information recording medium 101. By this, the electrostatic capacitance C of the ferroelectric film 101a at a position facing the tip portion of the probe 131a is changed because of an alternating electric field formed by the application of the AC signal and the dielectric constant of the ferroelectric film 101a. This electrostatic capacitance change includes a non-linear dielectric component in which a sign is reversed in accordance with the polarization state of the ferroelectric film 101a at the position facing the tip portion of the probe 131a.

The oscillator 117 oscillates at a resonance frequency of a LC resonance circuit which is constructed from an inductance L of the second inductor 116 and from the electrostatic capacitance C of the ferroelectric film 101a. Therefore, the frequency of an oscillation signal outputted from the oscillator 117 is modulated in accordance with the change of the electrostatic capacitance C. This oscillation signal is demodulated by the FM demodulator 118 and is supplied to the signal detector 119a.

The signal detector 119a is constructed from a lock-in amplifier, for example. The signal detector 119a detects the nonlinear dielectric component in which a sign is reversed in accordance with the polarization state of the ferroelectric film 101a at the position facing the tip portion of the probe 131a. The AC signal outputted from the AC signal generator 112a is supplied to the signal detector 119a, and this AC signal is used as a reference signal upon detecting the nonlinear dielectric component. The nonlinear dielectric component as detected in this manner corresponds to the polarization state of the ferroelectric film 101a at the position facing the tip portion of the probe 131a, i.e. the information recorded in the ferroelectric film 101a at the position. By performing the above-described reproduction operation along with the rotation of the information recording medium 101 and the displacement of the information recording / reading head 110, the information recorded in the information recording medium 101 is reproduced.

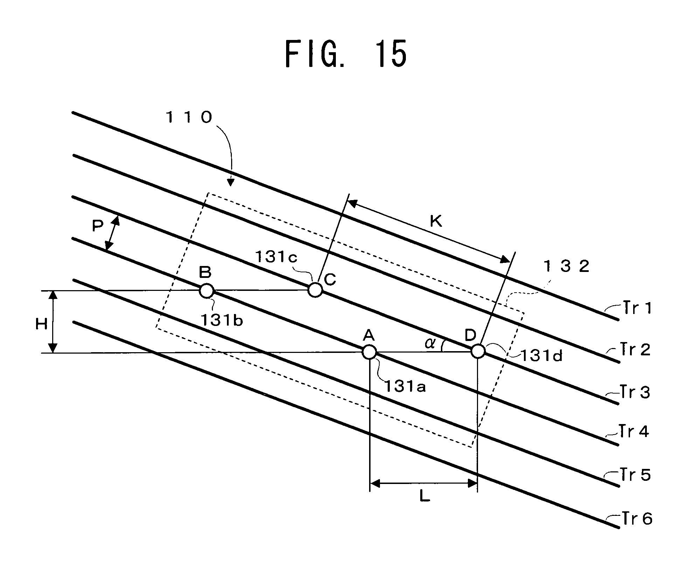

Next, the structure of the information recording / reading head 110 will be explained. FIG. 15 shows the positions of the tip portions of the probes 131a to 131d placed on the information recording / reading head 110 (specifically, FIG. 13 shows a condition in which the probes 131a to 131d are observed from the topside through a support substrate 132). In FIG. 15, thick oblique lines individually indicate tracks Tr1 to Tr6 of the information recording medium 101.

The information recording / reading head 110 is provided with: the support substrate 132; and the four probes 131a to 131d. The support substrate 132 is formed of a silicon material. Each of the probes 131a to 131d is formed of carbon nanotube, and its radius is from several nanometers to several tens nanometers. The probes 131a to 131d are supported by the support substrate 132 on their base side, and extend toward the information recording medium 101 on their tip side. In recording and reproducing information, each of the tip portions of the probes 131a to 131d is placed several nanometers away from the recording surface 101c of the information recording medium 101.

The probes 131a to 131d are arranged on the support substrate 132 such that if the positions of their recording / reading end portions are A, B, C, and D, a parallelogram is formed in which a line segment AB is parallel to a line segment CD, and a line segment AC is parallel to a line segment BD, and that if the ratio of the length K of the line segment AB to the length L of the line segment AC is η and the height of the parallelogram is H when the line segment AC is regarded as a base, and if the track pitch is P, the following relationship is satisfied,

$$H = \eta \cdot P \tag{11}$$

Moreover, if the angle made by the line segment AC and the line segment CD is α, the following relationship is satisfied:

$$L \cdot \sin\alpha = P \tag{12}$$

The information recording / reading head 110 is positioned with respect to the information recording medium 101 such that the two probes 131a and 131b are placed on one track and the remaining two probes 131c and 131d are placed on another track adjacent to the one track. In other words, the information recording / reading head 110 is positioned such that the base AC of the parallelogram in FIG. 15 crosses with the tracks at the angle α.

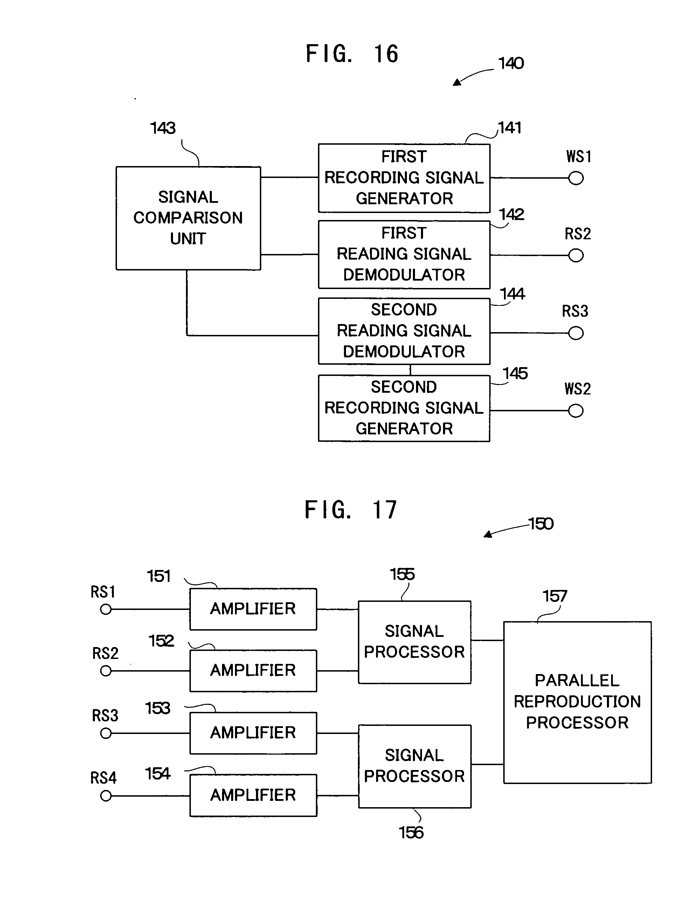

Next, the internal structure and operation of the record processing circuit 140 will be explained. FIG. 16 shows the internal structure of the record processing circuit 140. As shown in FIG. 16, the record processing circuit 140 is provided with: a first recording signal generator 141; a first reading signal demodulator 142; a signal comparison unit 143; a second reading signal demodulator 144; and a second recording signal generator 145.

The first recording signal generator 141 is connected to a route leading to the probe 131a of the information recording / reading head 110, through the switch 113a and the first inductor 114a (refer to FIG. 14). The first recording signal generator 141 receives information to be recorded into the information recording medium 101 (hereinafter referred to as "record information") from the exterior, generates a recording signal Ws1 corresponding to this information, and outputs this to the probe 131a. Moreover, the first recording signal generator 141 is also connected to the signal comparison unit 143, and supplies the record information to the signal comparison unit 143.

The first reading signal demodulator 142 is connected to the output side of the signal detector 119b. The signal detector 119b detects information recorded at a position on the recording surface 101c which the tip portion of the probe 131b of the information recording / reading head 110 faces, and outputs this as a reading signal Rs2. The first reading signal demodulator 142 receives the reading signal Rs2, demodulates it, and supplies the demodulated reading signal Rs2 to the signal comparison unit 143 as reproduced information.

The signal comparison unit 143 compares the record information supplied from the first recording signal generator 141 with the reproduced information supplied from the first reading signal demodulator 142, to examine whether or not the both information is in agreement. If the record information and the reproduced information are not in agreement, it is estimated that the record information is not correctly recorded on the recording surface 101c of the information recording medium 101. Thus, if the record information and the reproduced information are not in agreement, the signal comparison unit 143 supplies position information which indicates a position on the recording surface 101c where the record information is recorded by mistake or recorded incompletely (or a position on the recording surface 101c where the record information is to be recorded), to the second reading signal demodulator 144. Moreover, at this time, out of the record information, address information for pointing out the not-correctly-recorded portion, is stored and held by a not-illustrated microcomputer or the like.

The second reading signal demodulator 144 is connected to the output side of the signal detector 119c. The signal detector 119c detects information recorded at a position on the recording surface 101c which the tip portion of the probe 131c faces, and outputs this as a reading signal Rs3. The second reading signal demodulator 144 receives the reading signal Rs3, demodulates it, and recognizes the current position of the tip portion of the probe 131c on the recording surface 101c, on the basis of the demodulated reading signal Rs3. Moreover, the second reading signal demodulator 144 receives the position information outputted from the signal comparison unit 143 and searches for the position on the recording surface 101c corresponding to the position pointed by the position information. Namely, each of the probes 131a and 131c of the information recording / reading head 110 are placed on respective one of the two tracks adjacent to each other (refer to FIG. 15). Moreover, the information recording / reading head 110 is displaced in the radial direction of the information recording / reading head 110 by the track pitch P. Therefore, on the recording surface 101c, the position which the tip portion of the probe 131a faces is displaced to the position which the tip portion of the probe 131c faces, by the fact that the information recording medium 101 makes substantially one revolution. Therefore, when the information recording medium 101 makes substantially one revolution after the record information is recorded by mistake or incompletely onto the recording surface 101c, the position on the recording surface 101c where the erroneous or incomplete record information is recorded moves to the position which the tip portion of the probe 131c faces. In order to search for the position on the recording surface 101c which corresponds to the position pointed by the position information, the second reading signal demodulator 144 judges whether or not the current position of the tip portion of the probe 131c on the recording surface 101c agrees with the position pointed by the position information. Then if the both positions are in agreement, the second reading signal demodulator 144 outputs a re-recording command signal to the second record signal generator 145.

The second record signal generator 145 is connected to a route leading to the probe 131d of the information recording / reading head 110, through the switch 113d and the first inductor 114d (refer to FIG. 14). The second record signal generator 145 follows the re-recording command signal outputted from the second reading signal demodulator 144, obtains the record information pointed by the address information which is stored and held in the microcomputer, from the exterior, generates a recording signal Ws2 corresponding to the record information, and records this onto the position on the recording surface 101c which corresponds to the position pointed by the position information, through the probe 131d. Incidentally, since the interval between the probes 131c and 131d is known in advance, the position on the recording surface 101c which corresponds to the position pointed by the position information can be specified by obtaining clock information or the like, which is recorded in advance on the recording surface 101c of the information recording medium 101, and counting a clock based on the clock information. Moreover, the unit of the record information which is recorded again may be a block unit constructed from information having a predetermined length, or a bit, byte, or word unit of information.

As described above, the probes 131a and 131b of the information recording / reading head 110d are placed on one track, and the probes 131c and 131d are placed on another track adjacent to the one track. The record information is recorded by the probe 131a, and the record information recorded by the probe 131a is readily read by the probe 131b. On the basis of the read information, recording failure by the probe 131a is detected, and the record information is recorded again by the probe 131d. By virtue of this construction, it is possible to improve the recording accuracy of the record information. Moreover, according to such a construction, the failure detection and re-recording of the record information can be performed without jumping the tracks, so that it is possible to increase the information recording speed.

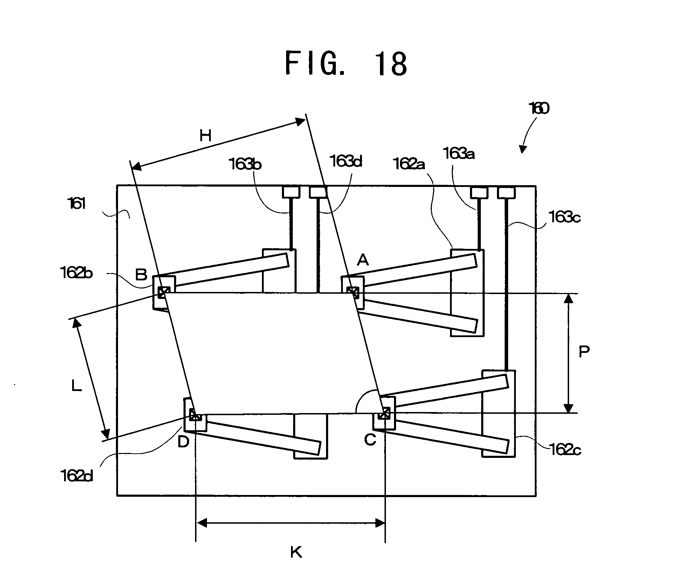

Next, the internal structure and operation of the reproduction processing circuit 150 will be explained. FIG. 17 shows the internal structure of the reproduction processing circuit 150. As shown in FIG. 17, the reproduction processing circuit 150 is provided with: amplifiers 151 to 154; a first signal processor 155; a second signal processor 156; and a parallel reproduction processor 157.

The first signal processor 155 has two input terminals, and one of the input terminals is connected to the output side of the signal detector 119a through the amplifier 151. The signal detector 119a detects the information recorded at a position on the recording surface 101c which the tip portion of the probe 131a of the information recording / reading head 110 faces, and outputs this as a reading signal Rs1. The first signal processor 155 receives the reading signal Rs1. Moreover, the other input terminal of the first signal processor 155 is connected to the output side of the signal detector 119b through the amplifier 152. The signal detector 119b detects the information recorded at a position on the recording surface 101c which the tip portion of the probe 131b of the information recording / reading head 110 faces, and outputs this as a reading signal Rs2. The first signal processor 155 receives the reading signal Rs2. Moreover, the first signal processor 155 compares each level of the reading signals Rs1 and Rs2 with a predetermined standard level. If both levels of the reading signals Rs1 and Rs2 reach the standard level, they are added to each other after the adjustment of the time difference of the both signals. The probes 131a and 131b are on the same track. Thus, although having the time difference corresponding to the distance between the probes 131a and 131b, the reading signals Rs1 and Rs2 obtained by the probes 131a and 131b, respectively, have the same content. Therefore, by adding the both signals to each other, after the adjustment of the time difference of the both signals, a signal having an amplitude twice as large as that of the individual reading signal Rs1 or Rs2 (hereinafter referred to as a "read and added signal") is obtained.

On the other hand, as a result of the comparison in which each level of the reading signals Rs1 and Rs2 are compared with the standard level, if either or both levels of the reading signals do not reach the standard level, the first signal processor 155 selects a higher level signal out of the both signals (hereinafter, the signal selected in this manner is referred to as a "read and selected signal"). Then, the first signal processor 155 supplies the read and added signal or the read and selected signal to the parallel reproduction processor 157.

The second signal processor 156 has two input terminals, and one of the input terminals is connected to the output side of the signal detector 119c through the amplifier 153. The signal detector 119c detects the information recorded at a position on the recording surface 101c which the tip portion of the probe 131c of the information recording / reading head 110 faces, and outputs this as a reading signal Rs3. The second signal processor 156 receives the reading signal Rs2. Moreover, the other input terminal of the second signal processor 156 is connected to the output side of the signal detector 119d through the amplifier 154. The signal detector 119d detects the information recorded at a position on the recording surface 101c which the tip portion of the probe 131d of the information recording / reading head 110 faces, and outputs this as a reading signal Rs4. The second signal processor 156 receives the reading signal Rs4. Then, the second signal processor 156 compares each level of the reading signals Rs3 and Rs4 with the predetermined standard level. In the same manner as with the above-described first signal processor 155, the second signal processor 156 obtains a read and added signal or a read and selected signal, and supplies it to the parallel reproduction processor 157.

The parallel reproduction processor 157 adjusts the reproduction timing or the like of the read and added signal or the read and selected signal which is associated with one track and which is supplied from the first signal processor 155, and the read and added signal or the read and selected signal which is associated with another track and which is supplied from the first signal processor 156. The parallel reproduction processor 157 adjusts the signals as one continuous reproduction signal, and then, outputs it to the exterior.

As described above, the probes 131a and 131b (131c and 131d) of the information recording / reading head 110 are placed on one track (another track). The information recorded on the one track (another track) is individually read by the probes 131a and 131b (131c and 131d). If both reading signals can be read at a sufficient level, the both signals are added, to thereby obtain a larger level signal. On the basis of the larger level signal, the information is reproduced. By virtue of such a construction, it is possible to improve the information reproduction accuracy. Moreover, if either or both levels of the reading signals are insufficient, a higher level reading signal is selected out of the both signals, and on the basis of the selected signal, the information is reproduced. By virtue of such a construction, even if the reading signal cannot be obtained sufficiently due to some troubles, it is possible to improve the information reproduction accuracy as much as possible. Moreover, such a reproduction operation is simultaneously performed on one track and another track adjacent to the one track, so that it is possible to increase the information reproducing speed.

Incidentally, in the above-described example, on the record processing circuit 140, the reading signal Rs2 obtained from the signal detector 119b is demodulated by the first reading signal demodulator 142, to thereby obtain the reproduction information, and the reproduction information is compared with the record information. However, the present invention is not limited to this construction, and the recording signal Ws1 generated by the first recording signal generator 141 may be directly compared with the reading signal Rs2 obtained from the signal detector 119b.

Moreover, in the above-described example, in realizing the information recording, failure detecting, and re-recording operations, the probe 131c is used for the position detection, and the probe 131d is used for the re-recording. However, the present invention is not limited to this construction, and only the probe 113c may be used for the position detection and the re-recording. Specifically, on the information recording / reproducing apparatus 100 shown in FIG. 14, the switch 113c is replaced by a switch having a change-over function of changing over two input terminals, such as the switch 113d, and a route for supplying the recording signal Ws2 to one of the input terminals of the switch is provided. Then, while the input terminals of the switch are changed over upon both the position detection and the re-recording, the both operations are sequentially performed. According to such a construction, it is possible to get rid of the probe 113d. However, if the probe 131d is used for the conformation of whether or not the re-recording is correctly performed (re-detection of failure), it is possible to further improve the information recording accuracy.

Moreover, in the above-described example, the disk-shaped information recording medium 101 is used. However, the present invention is not limited to this example, and a card-shaped information recording medium may be used.

Furthermore, in the above-described example, the four probes 131a to 131d are provided on the information recording / reading head 110. However, the present invention is not limited to this example, and more probes may be provided. In this case, mutually adjacent four probes are arranged such that a parallelogram is formed from their tip portions and that the above-described equations (11) and (12) are satisfied. Arranging multiple probes in this manner causes a plurality of probes to be assigned on the same track. Thus, even if there arises a defective in manufacturing and a failure due to deterioration over time, in one portion of the probes, it is possible to sufficiently perform the recording and reading of the information through another probe. Therefore, even if one portion of the probes has a defective in the production of the information recording / reading head, this can be treated as a good product as long as there is no problem in quality as a product because of the other normal probes. By this, it is possible to improve the yield. Moreover, even if there arises a failure in one portion of the probes because of the deterioration over time, there is no problem in the recording and reproduction operations as long as other probes are normal, eventually. Therefore, it is possible to improve the durability of the information recording / reading head and extend its lifetime.

Moreover, in the above-described example, the bar-shaped probes, formed of carbon nanotube, are adopted as the recording / reading elements of the information recording / reading head. However, the present invention is not limited to this example, and as an information recording / reading head 160 shown in FIG. 18, cantilevers 162a to 162d may be provided on a support substrate 161.

Moreover, the case where the probes are away from the medium was explained, however, the probes may be in contact with the medium.

The cantilevers 162a to 162d of the information recording / reading head 160 shown in FIG. 18 are arranged on the support substrate 161 such that the above-described equation (11) holds true if the positions of their recording / reading end portions are A, B, C, and D, a parallelogram is formed in which a line segment AB is parallel to a line segment CD, and a line segment AC is parallel to a line segment BD, and that if the ratio of the length K of the line segment CD to the length L of the line segment AC is η and the height of the parallelogram is H when the line segment AC is regarded as a base. Moreover, the cantilevers 162a to 162d are arranged on the support substrate 161 such that the following relationship applies:

$$(n^2 \cdot K^2/L^2)+(H^2/K^2) = 1 \text{ (n is a natural number)} \tag{13}$$

By this, it is possible to place the cantilevers 162a and 162b onto one track, and place the cantilevers 162c and 162d onto another track adjacent to the one track. Moreover, it is possible to prevent the cantilevers 162a to 162d from arranging in a square shape. By this, as shown in FIG. 18, it is possible to linearly form signal lines 163a to 163d, which are connected to the cantilevers 162a to 162d, respectively. Therefore, it is possible to shorten the signal lines 163a to 163d, which facilitates their arrangement design and formation.

Incidentally, in the above-described examples, the track pitch P is a constant value. However, it may be variable in each recording area. Alternately, if there is a plurality of recording layers, the track pitch may be different in each of the layers. If there is such a construction that the above-described equation (1), (4), (5), or (6), and the conditions described above as the embodiments or examples are satisfied, even in one portion, the effect is shown in that portion.

The present invention is not limited to the above-described embodiments, and changes may be made if desired without departing from the scope or spirit of the invention which can be read from the claims and the entire specification.

An information recording / reading head and an information recording / reproducing apparatus that accompany such changes are also intended to be within the technical scope of the present invention.

Industrial Applicability

The information recording / reading head and the information recording / reproducing apparatus of the present invention can be applied to memories, storage devices, and other various recording apparatuses and reproducing apparatuses, which allow the high-density, large-capacity information recording. Moreover, the information recording / reading head and the information recording / reproducing apparatus of the present invention can be mounted on a computer, an audio apparatus, an automobile, an airplane, medical equipment, a robot, a control apparatus, portable communication equipment, and the like, for use as the information recording device of these equipment.

**Claims**

1.  An information recording / reading head for recording information onto tracks of an information recording medium having the tracks with a track pitch of P, or reading information recorded on the tracks of the information recording medium,
    the information recording / reading head comprising:

    a support portion; and
    four or more recording / reading elements which are supported by the support portion and which record information onto the tracks of the information recording medium or which read information recorded on the tracks of the information recording medium,
    at least four of the recording / reading elements being arranged on the support portion such that if the positions of recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if a ratio of the length of the line segment AB to the length of the line segment AC is $\eta$ and the height of the parallelogram is H when the line segment AC is regarded as a base, the following relationship is satisfied:

$$H = \eta \cdot P.$$

2.  An information recording / reading head for recording information onto tracks of an information recording medium having the tracks with a track pitch of P, or reading information recorded on the tracks of the information recording medium,
    the information recording / reading head comprising:

    a support portion; and
    four or more recording / reading elements which are supported by the support portion and which record information onto the tracks of the information recording medium or which read information recorded on the tracks of the information recording medium,
    at least four of the recording / reading elements being arranged on the support portion such that if the positions of recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if the length of the line segment AC is L and an angle ACD made by the line segment AC and the line segment CD is $\alpha$, the following relationship is satisfied:

$$L \cdot \sin\alpha = P.$$

3.  An information recording / reading head for recording information onto tracks of an information recording medium having the tracks with a track pitch of P, or reading information recorded on the tracks of the information recording medium,
    the information recording / reading head comprising:

a support portion; and

four or more recording / reading elements which are supported by the support portion and which record information onto the tracks of the information recording medium or which read information recorded on the tracks of the information recording medium,

at least four of the recording / reading elements being arranged on the support portion such that if the positions of recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if a ratio of the length of the line segment AB to the length of the line segment AC is $\eta$ and the height of the parallelogram is H when the line segment AC is regarded as a base, the following relationship is satisfied:

$$H = m \cdot \eta \cdot P \text{ (wherein m is a natural number)}.$$

4. An information recording / reading head for recording information onto tracks of an information recording medium having the tracks with a track pitch of P, or reading information recorded on the tracks of the information recording medium,

the information recording / reading head comprising:

a support portion; and

four or more recording / reading elements which are supported by the support portion and which record information onto the tracks of the information recording medium or which read information recorded on the tracks of the information recording medium,

at least four of the recording / reading elements being arranged on the support portion such that if the positions of recording / reading end portions of the recording / reading elements are A, B, C, and D, a parallelogram is formed in which a line segment AB connecting A and B is parallel to a line segment CD connecting C and D, and a line segment AC connecting A and C is parallel to a line segment BD connecting B and D, and that if the length of the line segment AC is L and an angle ACD made by the line segment AC and the line segment CD is $\alpha$, the following relationship is satisfied:

$$L \cdot \sin\alpha = m \cdot P \text{ (wherein m is a natural number)}.$$

5. The information recording / reading head according to claim 1, wherein the at least four recording / reading elements are arranged on the support portion such that if the length of the line segment AC is L and the line segment CD is K, the following relationship is satisfied,

$$(n^2 \cdot K^2 / L^2) + (H^2 / K^2) \neq 1 \text{ (n is a natural number)}.$$

6. An information recording / reading head for recording information onto tracks of an information recording medium, or reading information recorded on the tracks of the information recording medium,

the recording / reading head comprising:

a support portion; and

three or more recording / reading elements which are supported by the support portion and which record information onto the tracks of the information recording medium or which read information recorded on the tracks of the information recording medium,

at least three of the recording / reading elements being arranged on the support portion such that when recording / reading end portions of two of the three recording / reading elements are positioned on one track, a recording / reading end portion of the remaining one of the three recording / reading elements is placed on another track.

7. An information recording / reading head for recording information onto tracks of an information recording medium, or reading information recorded on the tracks of the information recording medium,

the recording / reading head comprising:

a support portion; and

four or more recording / reading elements which are supported by the support portion and which record information onto the tracks of the information recording medium or which read information recorded on the tracks of the information recording medium,

at least four of the recording / reading elements being arranged on the support portion such that when recording / reading end portions of two of the four recording / reading elements are positioned on one track, recording / reading end portions of the remaining two of the four recording / reading elements are placed on another track.

8. The information recording / reading head according to claim 7, wherein the at least four recording / reading elements are arranged on the support portion such that if the recording / reading end portions of the two recording / reading elements positioned on the one track are R and S, and the recording / reading end portions of the two recording / reading elements positioned on the another track are T and U, a parallelogram is formed in which a line segment RS connecting R and S is parallel to a line segment TU connecting T and U, and a line segment RT connecting R and T is parallel to a line segment SU connecting S and U.

9. The information recording / reading head according to claim 6, wherein the one track and the another track are adjacent to each other.

10. The information recording / reading head according to claim 1, wherein the recording / reading elements are probes.

11. An information recording / reproducing apparatus for recording information onto tracks of an information recording medium, or reproducing information recorded on the tracks of the information recording medium, the information recording / reproducing apparatus comprising:

an information recording / reading head which has: a support portion; and two or more recording / reading elements which are supported by the support portion and which record information onto the tracks of the information recording medium or which read information recorded on the tracks of the information recording medium, at least two of the recording / reading elements being arranged on the support portion such that their recording / reading end portions are placed on one track;
a signal applying device which applies a signal corresponding to information, to any one of the two recording / reading elements, in order to record the information onto the tracks of the information recording medium through the one recording / reading element; and
an information reading device which readily reads information recorded on the tracks of the information recording medium by the signal applying device, through the other recording / reading element out of the two recording / reading elements.

12. An information recording / reproducing apparatus for recording information onto tracks of an information recording medium, or reproducing information recorded on the tracks of the information recording medium, the information recording / reproducing apparatus comprising:

an information recording / reading head which has: a support portion; and three or more recording / reading elements which are supported by the support portion and which record information onto the tracks of the information recording medium or which read information recorded on the tracks of the information recording medium, at least three of the recording / reading elements being arranged on the support portion such that if recording / reading end portions of two of the three recording / reading elements are positioned on one track, a recording / reading end portion of the remaining one of the three recording / reading elements is placed on another track;
a first signal applying device which applies a signal corresponding to information, to any one of the two recording / reading elements placed on the one track, in order to record the information onto the one track through the one recording / reading element;
an information reading device which readily reads information recorded on the one track by the first signal applying device, through the other recording / reading element out of the two recording / reading elements placed on the one track;
a judging device which judges whether or not the recording of information by the first signal applying device is correctly performed, on the basis of information read by the information reading device; and
a second signal applying device which applies a signal corresponding to information, to the remaining one recording / reading element, in order to record the information again onto the one track through the remaining one recording / reading element, if the recording of information by the first signal applying device is not correctly performed.

**13.** An information recording / reproducing apparatus for recording information onto tracks of an information recording medium, or reproducing information recorded on the tracks of the information recording medium, the information recording / reproducing apparatus comprising:

an information recording / reading head which has: a support portion; and four or more recording / reading elements which are supported by the support portion and which record information onto the tracks of the information recording medium or which read information recorded on the tracks of the information recording medium, at least four of the recording / reading elements being arranged on the support portion such that if recording / reading end portions of two of the four recording / reading elements are positioned on one track, recording / reading end portions of the remaining two of the four recording / reading elements are placed on another track;

a first signal applying device which applies a signal corresponding to one portion of information, to any one of the two recording / reading elements placed on the one track, in order to record the one portion of the information onto the one track through the one recording / reading element;

a first information reading device which readily reads the one portion of the information recorded on the one track by the first signal applying device, through the other recording / reading element out of the two recording / reading elements placed on the one track;

a second signal applying device which applies a signal corresponding to another portion of the information, to any one of the two recording / reading elements placed on the another track, in order to record the another portion of the information onto the another track through the one recording / reading element; and

a second information reading device which readily reads the another portion of the information recorded on the another track by the second signal applying device, through the other recording / reading element out of the two recording / reading elements placed on the another track.

**14.** An information recording / reproducing apparatus for recording information onto tracks of an information recording medium, or reproducing information recorded on the tracks of the information recording medium, the information recording / reproducing apparatus comprising:

an information recording / reading head which has: a support portion; and four or more recording / reading elements which are supported by the support portion and which record information onto the tracks of the information recording medium or which read information recorded on the tracks of the information recording medium, at least four of the recording / reading elements being arranged on the support portion such that if recording / reading end portions of two of the four recording / reading elements are positioned on one track, recording / reading end portions of the remaining two of the four recording / reading elements are placed on another track;

a first signal applying device which applies a signal corresponding to information, to any one of the two recording / reading elements placed on the one track, in order to record the information onto the one track through the one recording / reading element;

an information reading device which readily reads information recorded on the one track by the first signal applying device, through the other recording / reading element out of the two recording / reading elements placed on the one track;

a judging device which judges whether or not the recording of information by the first signal applying device is correctly performed, on the basis of information read by the information reading device;

a second signal applying device which applies a signal corresponding to information, to any one of the remaining two recording / reading elements, in order to record the information again onto the one track through the one recording / reading element; and

a record position detecting device which detects a record position on the one track of information to be recorded by the second signal applying device, through the other recording / reading element out of the remaining two recording / reading elements.

**15.** The information recording / reproducing apparatus according to claim 13, wherein the information recording / reading head is the information recording / reading head according to claim 1.

**16.** The information recording / reproducing apparatus according to claim 14, wherein the information recording / reading head is the information recording / reading head according to claim 1.

**17.** The information recording / reproducing apparatus according to claim 11, the recording / reading elements are probes.

**18.** An information reproducing apparatus for reproducing information recorded on tracks of an information recording medium,

the information reproducing apparatus comprising:

an information reading head which has: a support portion; and two or more reading elements which are supported by the support portion and which read information recorded on the tracks of the information recording medium, at least two of the reading elements being arranged on the support portion such that their reading end positions are placed on one track;

a signal reading device in which the two reading elements individually read the same information recorded at a same place on the track of the information recording medium, to thereby obtain two reading signals corresponding to the same information;

a signal adding device which adds the two reading signals obtained by the signal reading device to each other, after the difference at a reading time point of the two reading elements is adjusted; and

a reproducing device which reproduces the information on the basis of the reading signal added by the signal adding device.

**19.** An information reproducing apparatus for reproducing information recorded on tracks of an information recording medium,

the information reproducing apparatus comprising:

an information reading head which has: a support portion; and two or more reading elements which are supported by the support portion and which read information recorded on the tracks of the information recording medium, at least two of the reading elements being arranged on the support portion such that their reading end positions are placed on one track;

a signal reading device in which the two reading elements individually read the same information recorded at a same place on the track of the information recording medium, to thereby obtain two reading signals corresponding to the same information;

a signal selecting device which selects any one of the two reading signals obtained by the signal reading device; and

a reproducing device which reproduces the information on the basis of the reading signal selected by the signal selecting device.

**20.** An information reproducing apparatus for reproducing information recorded on tracks of an information recording medium,

the information reproducing apparatus comprising:

an information reading head which has: a support portion; and two or more reading elements which are supported by the support portion and which read information recorded on the tracks of the information recording medium, at least two of the reading elements being arranged on the support portion such that their reading end positions are placed on one track;

a signal reading device in which the two reading elements individually read the same information recorded at a same place on the track of the information recording medium, to thereby obtain two reading signals corresponding to the same information;

a signal adding device which adds the two reading signals obtained by the signal reading device to each other, after the difference at a reading time point of the two reading elements is adjusted, if both levels of the two reading signals reach a predetermined level;

a signal selecting device which selects a higher level reading signal from the two reading signals obtained by the signal reading device, if either or both levels of the two reading signals do not reach the predetermined level; and

a reproducing device which reproduces the information on the basis of the reading signal added by the signal applying device or the reading signal selected by the signal selecting device.

**21.** The information reproducing apparatus according to claim 18, wherein the reading elements are probes.

# FIG. 1

# FIG. 2

## FIG. 3

## FIG. 4

FIG. 5

FIG. 6

# FIG. 7

SIGNAL APPLYING DEVICE 1 5

INFORMATION READING DEVICE 1 6

# FIG. 8

# FIG. 9

# FIG. 10

# FIG. 11

71

72

74

73

Tr 1

Tr 2

Tr 3

Tr 4

Tr 5

Tr 6

| SIGNAL READING DEVICE | 75 |

| SIGNAL ADDING DEVICE | 76 |

| REPRODUCING DEVICE | 77 |

# FIG. 12

81

82

Tr 1

84

Tr 2

83

Tr 3

Tr 4

Tr 5

Tr 6

| SIGNAL READING DEVICE | 85 |
| SIGNAL SELECTING DEVICE | 86 |
| REPRODUCING DEVICE | 87 |

# FIG. 13

FIG. 14

EP 1 577 889 A1

# FIG. 15

## FIG. 16

140

143 — SIGNAL COMPARISON UNIT

141 — FIRST RECORDING SIGNAL GENERATOR — WS1

142 — FIRST READING SIGNAL DEMODULATOR — RS2

144 — SECOND READING SIGNAL DEMODULATOR — RS3

145 — SECOND RECORDING SIGNAL GENERATOR — WS2

## FIG. 17

150

RS1 — 151 AMPLIFIER

RS2 — 152 AMPLIFIER

155 SIGNAL PROCESSOR

RS3 — 153 AMPLIFIER

RS4 — 154 AMPLIFIER

156 SIGNAL PROCESSOR

157 PARALLEL REPRODUCTION PROCESSOR

# FIG. 18

**EP 1 577 889 A1**

<table>
<tr><td colspan="2" align="center">**INTERNATIONAL SEARCH REPORT**</td><td>International application No.<br>PCT/JP03/15624</td></tr>
</table>

**A. CLASSIFICATION OF SUBJECT MATTER**
Int.Cl$^7$ G11B9/14

According to International Patent Classification (IPC) or to both national classification and IPC

**B. FIELDS SEARCHED**

Minimum documentation searched (classification system followed by classification symbols)
Int.Cl$^7$ G11B9/00-9/14, G11B7/12-7/22

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 4-115103 A (Canon Inc.),<br>16 April, 1992 (16.04.92),<br>Page 2, lower left column, line 10 to page 5,<br>upper right column, line 1; Figs. 1, 8 to 9<br>(Family: none) | 1-4,10<br>5 |
| X<br>A | JP 10-143895 A (Tokai University),<br>29 May, 1998 (29.05.98),<br>Par. No. [0018]; Fig. 8<br>& JP 10-172166 A    & US 6084848 A1 | 1-4,6-10<br>5 |
| X<br>A | JP 5-159735 A (Pioneer Electronic Corp.),<br>25 June, 1993 (25.06.93),<br>Par. Nos. [0016] to [0018]; Fig. 4<br>& US 5319198 A1 | 1-4,6-10<br>5 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 March, 2004 (19.03.04) | Date of mailing of the international search report<br>30 March, 2004 (30.03.04) |
|---|---|
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

| International application No. |
| --- |
| PCT/JP03/15624 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP 7-210903 A (Matsushita Electric Industrial Co., Ltd.),<br>11 August, 1995 (11.08.95),<br>Par. No. [0018]; Fig. 7<br>(Family: none) | 1-4,6-10,<br>13,15<br>12,14,16 |
| X<br>Y | JP 7-235086 A (Nikon Corp.),<br>05 September, 1995 (05.09.95),<br>Par. Nos. [0017] to [0031]; Figs. 1 to 2<br>(Family: none) | 11,17<br>1-4,6-10,<br>13,15,18,21 |
| Y<br>A | JP 7-192343 A (NEC Corp.),<br>28 July, 1995 (28.07.95),<br>Par. Nos. [0006] to [0015]; Figs. 1 to 7<br>(Family: none) | 18,21<br>19,20 |

Form PCT/ISA/210 (continuation of second sheet) (July 1998)

EP 1 577 889 A1

## INTERNATIONAL SEARCH REPORT

| International application No. |
| PCT/JP03/15624 |

**Box I    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

```
  Claims 6 and 9 relate to the arrangement of recording/reading elements in
a device having three recording/reading elements.
  Claims 7 and 8 relate to the arrangement of recording/reading elements in
a device having four recording/reading elements.
  Claim 12, Claims 13 and 15, and Claims 14 and 16 relate to different
recording/reproducing operations.
  Claims 18 and 21, Claim 19, and Claim 20 are characterized by different
information reproducing methods.
```

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**        ☐ The additional search fees were accompanied by the applicant's protest.

                             ☒ No protest accompanied the payment of additional search fees.

Form PCT/ISA/210 (continuation of first sheet (1)) (July 1998)

45